(19) Europäisches Patentamt
European Patent Office
Office européen des brevets

(11) **EP 4 246 537 A2**

(12) **EUROPEAN PATENT APPLICATION**
published in accordance with Art. 153(4) EPC

(43) Date of publication:
**20.09.2023 Bulletin 2023/38**

(21) Application number: **21891941.3**

(22) Date of filing: **11.11.2021**

(51) International Patent Classification (IPC):
**H01B 13/00** (2006.01)

(52) Cooperative Patent Classification (CPC):
**H01B 13/00;** Y02E 60/10

(86) International application number:
**PCT/JP2021/041497**

(87) International publication number:
**WO 2022/102696 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.11.2020 JP 2020189420**

(71) Applicant: **Idemitsu Kosan Co., Ltd
Tokyo 100-8321 (JP)**

(72) Inventors:
• **SHIBATA, Masayuki
Sodegaura-shi, Chiba 299-0293 (JP)**
• **YAMADA, Hiroaki
Sodegaura-shi, Chiba 299-0293 (JP)**
• **ISEKI, Yusuke
Sodegaura-shi, Chiba 299-0293 (JP)**

(74) Representative: **Vossius & Partner
Patentanwälte Rechtsanwälte mbB
Siebertstraße 3
81675 München (DE)**

(54) **SOLID ELECTROLYTE PRODUCTION METHOD**

(57) The present invention addresses a problem of providing a production method for a sulfide solid electrolyte having a high ionic conductivity by pulverizing a sulfide solid electrolyte without complicating the production process. Provided is a production method for a crystalline sulfide solid electrolyte including mixing a raw material inclusion containing at least one selected from a lithium atom, a sulfur atom and a phosphorus atom, and a complexing agent without using a mechanical treating machine to obtain an electrolyte precursor, heating the electrolyte precursor to obtain a complex degradate, performing smoothing treatment on the complex degradate to obtain a smoothed complex degradate, and heating the smoothed complex degradate.

EP 4 246 537 A2

**Description**

Technical Field

The present invention relates to a solid electrolyte production method.

Background Art

With rapid spread of information-related instruments, communication instruments, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. However, development of batteries having a solid electrolyte layer in place of an electrolytic solution is being made in view of the fact that by making the battery fully solid, simplification of a safety unit may be realized without using a flammable organic solvent within the battery, and the battery is excellent in manufacturing costs and productivity.

Regarding a method of producing a solid electrolyte to be used for a solid electrolyte layer, particle size reduction is desired from the viewpoint of the performance and the productivity of all-solid-state lithium batteries. In an all-solid-state lithium battery, the positive electrode material, the negative electrode material and the electrolyte are all solid, and accordingly when the particle size of the solid electrolyte is small, the contact interface between the active substance and the solid electrolyte is easy to form, which therefore provides an advantage of good ionic conduction paths and electronic conduction paths. As a method for particle size reduction (pulverization), for example, disclosed is a production method that includes a process of adding an ether compound to a coarse particle material of a sulfide solid electrolyte material followed by pulverization (for example, see PTL 1).

Also as a production method for a solid electrolyte, a liquid-phase method attracts attention as a method of simple and mass-scale synthesis. However, in a liquid-phase method, it is difficult to precipitate a solid electrolyte with maintaining the dispersion state of atoms to constitute it, and therefore disclosed is a method for production of a solid electrolyte via an electrolyte precursor further using a complexing agent (for example, see PTL 2).

Citation List

Patent Literature

PTL 1: JP 2013-20894 A
PTL 2: WO 2020/105737 A1

Summary of Invention

Technical Problem

In view of the above-mentioned circumstances, the present invention has been made, and an object thereof is to provide a production method for a sulfide solid electrolyte having a high ionic conductivity by pulverizing a sulfide solid electrolyte without complicating the production process.

Solution to Problem

The production method for a crystalline sulfide solid electrolyte of the present invention is a production method for a crystalline sulfide solid electrolyte including:

mixing a raw material inclusion containing at least one selected from a lithium atom, a sulfur atom and a phosphorus atom, and a complexing agent without using a mechanical treating machine to obtain an electrolyte precursor,
heating the electrolyte precursor to obtain a complex degradate,
performing smoothing treatment on the complex degradate to obtain a smoothed complex degradate, and
heating the smoothed complex degradate.

Also the production method for a crystalline sulfide solid electrolyte of the present invention is a production method for a crystalline sulfide solid electrolyte including:

mixing a raw material inclusion containing at least one selected from a lithium atom, a sulfur atom and a phosphorus atom, and a complexing agent without using a mechanical treating machine to obtain an electrolyte precursor,
heating the electrolyte precursor to obtain a complex degradate,
mechanically processing the complex degradate to obtain a modified complex degradate, and
heating the modified complex degradate.

Advantageous Effects of Invention

The present invention can provide a method for producing a sulfide solid electrolyte having a high ionic conductivity, by pulverizing a sulfide solid electrolyte without complicating the production process.

Brief Description of Drawings

Fig. 1 is a flow chart of explaining one example of preferred modes of a production method of the present embodiment.
Fig. 2 is a flow chart of explaining one example of preferred modes of a flow including a reactor for use in a production method of the present embodiment.
Fig. 3 is a flow chart of explaining another example of preferred modes of a production method of the present embodiment.
Fig. 4 is a flow chart of explaining another example of preferred modes of a production method of the present embodiment.
Fig. 5 shows X-ray diffraction spectra of an electrolyte precursor (1), an amorphous complex degradate (1) and a crystalline sulfide solid electrolyte (1) obtained in Example 1.

Description of Embodiments

Embodiments of the present invention (hereinafter sometimes referred to as "present embodiment") are hereunder described. In this description, numerical values of an upper limit and a lower limit according to numerical value ranges of " XX or more", " YY or less", and "XX to YY" are each a numerical value which can be arbitrarily combined, and numerical values in Examples can also be used as numerical values of an upper limit and a lower limit, respectively.

(Knowledge that the inventors obtained for reaching the invention)

The present inventors have made assiduous studies for solving the above-mentioned problems and, as a result, have found out the following matters and completed the present invention.
In the production method described in PTL 1, the ionic conductivity could not increase sufficiently even after pulverization, and therefore, relative to the solid electrolyte before the pulverization process, the energy amount to be given for increasing the ionic conductivity tends to increase, and the production efficiency is not high. Consequently, a method for efficiently producing a crystalline sulfide solid electrolyte having a further higher ionic conductivity is desired.
It has been confirmed that the solid electrolyte produced using a polar solvent (complexing agent) like in the production method described in PTL 2 has a characteristic surface profile. In addition, it has been found that the average particle diameter ($D_{50}$) of the synthesized solid electrolyte particles is large and the particle size needs to be reduced.
The present inventors have found that, by pulverizing solid electrolyte particles produced using a polar solvent (complexing agent), the ionic conductivity can be increased with reducing the average particle size ($D_{50}$).
The present embodiment includes heating the electrolyte precursor to give the complex degrade, and then performing smoothing treatment on the complex degradate to obtain a smoothed complex degradate, or includes mechanically processing the complex degradate to obtain a modified complex degradate, and further heating the degradate, and it has been found that, a pulverized crystalline sulfide solid electrolyte having a high ionic conductivity can be produced without significantly changing conventional production processes.
In the present embodiment, "mechanical treatment" means treatment of stirring, mixing, grinding or a combination thereof, and by performing "mechanical treatment", a sulfide solid electrolyte having a high ionic conductivity can be produced by pulverizing a sulfide solid electrolyte without complicating the production process. Above all, "smoothing treatment" means treatment including at least grinding, and can produce a sulfide solid electrolyte having a higher ionic conductivity by attaining pulverization and specific surface area reduction.
By mere mechanical treatment of a solid electrolyte, including smoothing treatment to be mentioned hereinunder, the ionic conductivity of the sulfide solid electrolyte can increase, and therefore the present embodiment is an extremely excellent production method. The present embodiment differs from conventional production methods in the point of taking particular note of the surface profile of primary particles.

Though the reason why this can be achieved is not clear, it is considered that, when ions move through a solid electrolyte, conduction is suppressed in the interface between particles of the solid electrolyte, but the hypothesis is contemplated that, by pulverizing in "mechanical treatment" including "smoothing treatment", the particle interface to constitute a barrier to ionic conduction can reduce to thereby smooth ionic movement and, as a result, the ionic conductivity can improve.

Hereinunder described is a production method for a crystalline sulfide solid electrolyte of a first mode to a twelfth mode of the present embodiment.

The production method for a crystalline sulfide solid electrolyte of the first mode of the present embodiment is a production method for a crystalline sulfide solid electrolyte including:

mixing a raw material inclusion containing at least one selected from a lithium atom, a sulfur atom and a phosphorus atom, and a complexing agent without using a mechanical treating machine to obtain an electrolyte precursor,
heating the electrolyte precursor to obtain a complex degradate,
performing smoothing treatment on the complex degradate to obtain a smoothed complex degradate, and
heating the smoothed complex degradate.

In PTL 1, solid electrolyte production is performed using a planetary ball mill, which differs from the solid electrolyte production method using a polar solvent (complexing agent) of the present invention and in which the ionic inductivity does not greatly increase after the pulverization treatment. In addition, in this, owing to multiple planetary ball mill treatment, the process is also complicated.

According to the method of PTL 2, a solid electrolyte having a high ionic conductivity can be produced, but it has been confirmed that a solid electrolyte produced using a polar solvent (complexing agent) can have a characteristic surface profile. It has been known that, by smoothing the surface profile, a solid electrolyte having a further higher ionic conductivity can be produced.

According to the prior-art production methods, it is difficult to reduce the specific surface area by granulation or the like with reducing the particle size. As opposed to this, according to the first mode of the embodiment, the specific surface area of the primary particles can be reduced with reducing the particle size of the crystalline sulfide solid electrolyte or with keeping the particle size thereof as such, and therefore the ionic conductivity can be improved. The specific surface area will be described later.

The smoothing treatment to be mentioned below needs to be carried out before heating (crystallizing) the complex degradate to be mentioned below to thereby giving a crystalline sulfide solid electrolyte. The smoothing treatment can be carried out using specific raw materials and using a production device that is generally used in the field of the art, and therefore provides an industrially advantageous production method.

As described in PTL 1, for solid electrolyte production, there is known a solid-phase method that includes mixing raw materials such as lithium sulfide and diphosphorus pentasulfide using a grinding machine for a mechanical milling method or the like, optionally followed by heating. The grinding machine used in the solid-phase method requires a high pressure and it is difficult to attain increased production. As opposed to this, in the present embodiment, an electrolyte precursor can be obtained without using a mechanical treating machine such as a grinding machine for example in mixing, and therefore can be favorably produced in a simple production machine. In addition, it is considered that, as compared with PTL 2, the effect of increasing the ionic conductivity with reducing the particle size as mentioned above can be caused by the mode of mixing. Mixing the raw material inclusion and the complexing agent without using a mechanical treating machine is favorable for satisfying both pulverization in the subsequent smoothing treatment and a high ionic conductivity.

The production method for a crystalline sulfide solid electrolyte of the second mode of the present embodiment is a production method for a crystalline sulfide solid electrolyte, in which:
the raw material inclusion further contains a halogen atom.

As described below, the raw material inclusion further containing a halogen atom is preferred from the viewpoint of improving the ionic conductivity of the solid electrolyte.

The production method for a crystalline sulfide solid electrolyte of the third mode of the present embodiment is a production method for a crystalline sulfide solid electrolyte, in which:
the mixing includes a first mixing using a first complexing agent and a second mixing using a second complexing agent differing from the first complexing agent.

As described below, by combining a first mixing and a second mixing that differ in the complexing agent to be used therein, a more homogeneous solid electrolyte can be obtained, and is therefore advantageous from the viewpoint of improving the ionic conductivity. In addition, another advantage is that, by using complexing agents, reaction of the raw material inclusion can be carried out more easily without using a grinding machine.

The production method for a crystalline sulfide solid electrolyte of the fourth mode of the present embodiment is a production method for a crystalline sulfide solid electrolyte, in which:
the first complexing agent is a complexing agent that can form a complex containing $Li_3PS_4$ and a halogen atom, and the second complexing agent is a complexing agent that can form a complex containing $Li_3PS_4$.

As described below, by using complexing agents having specific characteristics in the first mixing and the second mixing, formation of $Li_3PS_4$ that may be retarded only by the first complexing agent can be promoted by the second complexing agent to obtain a homogeneous solid electrolyte, which is therefore favorable from the viewpoint of improving the ionic conductivity.

The production method for a crystalline sulfide solid electrolyte of the fifth mode of the present embodiment is a production method for a crystalline sulfide solid electrolyte, in which:
the smoothing treatment is carried out using at least one apparatus selected from a grinding machine and a stirring machine.

As described below, by carrying out the smoothing treatment using at least one apparatus selected from a grinding machine and a stirring machine, granulation of the solid electrolyte does not occur and the specific surface area can be reduced, which is therefore advantageous in point of improving the ionic conductivity.

The production method for a crystalline sulfide solid electrolyte of the sixth mode of the present embodiment is a production method for a crystalline sulfide solid electrolyte, in which:
the smoothing treatment is carried out using a solvent.

As described below, by carrying out the smoothing treatment along with a solvent, granulation of the solid electrolyte does not occur and the specific surface area can be reduced, which is therefore advantageous in point of improving the ionic conductivity.

The production method for a crystalline sulfide solid electrolyte of the seventh mode of the present embodiment is a production method for a crystalline sulfide solid electrolyte, in which:
the smoothing treatment is carried out using at least one apparatus selected from a ball mill, a bead mill, a cutter mill, a hammer mill, a pin mill, a tower mill, an attritor, an Aquamizer, a sand grinder, a Viscomill, a pearl mill, a co-ball mill and a dynamic grinding machine.

As described below, by carrying out the smoothing treatment using at least one apparatus selected from a ball mill, a bead mill, a cutter mill, a hammer mill, a pin mill, a tower mill, an attritor, an Aquamizer, a sand grinder, a Viscomill, a pearl mill, a co-ball mill and a dynamic grinding machine, granulation of the solid electrolyte does not occur and the specific surface area can be reduced, which is therefore advantageous in point of improving the ionic conductivity.

The production method for a crystalline sulfide solid electrolyte of the eighth mode of the present embodiment is a production method for a crystalline sulfide solid electrolyte, in which:
the solvent for use in the smoothing treatment is at least one selected from a non-polar solvent and an aprotic polar solvent.

As described below, by using at least one selected from a non-polar solvent and an aprotic polar solvent in the smoothing treatment, granulation of the solid electrolyte does not occur and the specific surface area can be reduced, which is therefore advantageous in point of improving the ionic conductivity.

The production method for a crystalline sulfide solid electrolyte of the ninth mode of the present embodiment is a production method for a crystalline sulfide solid electrolyte, in which:
the ratio of the specific surface area (Sb) of the complex degradate before the smoothing treatment to the specific surface area (Sa) of the smoothed complex degradate (Sb/Sa) is 1.0 or more and 10.0 or less.

The smoothing treatment in the present embodiment is preferred from the viewpoint of reducing the specific surface area of the particle surface of the solid electrolyte to improve the ionic conductivity of the solid electrolyte, but from the viewpoint of the simplicity of the process as described below, from the viewpoint of making the average particle size of the solid electrolyte fall within a specific range and from the viewpoint of improving the ionic conductivity of the solid electrolyte, the ratio of the specific surface area (Sb) of the complex degradate before the smoothing treatment to the specific surface area (Sa) of the smoothed complex degradate (Sb/Sa) is preferably 1.0 or more and 10.0 or less.

The production method for a crystalline sulfide solid electrolyte of the tenth mode of the present embodiment is a production method for a crystalline sulfide solid electrolyte, in which:
the ratio of the average particle size ($D_{50}b$) of the complex degradate before the smoothing treatment to the average particle size ($D_{50}a$) of the smoothed complex degradate ($D_{50}b/D_{50}a$) is 1.0 or more and 100.0 or less.

The smoothing treatment in the present embodiment is preferred from the viewpoint of reducing the specific surface area of the particle surface of the solid electrolyte to improve the ionic conductivity of the solid electrolyte, but from the viewpoint of the simplicity of the process as described below, from the viewpoint of making the average particle size of the solid electrolyte fall within a specific range and from the viewpoint of improving the ionic conductivity of the solid electrolyte, the ratio of the average particle size ($D_{50}b$) of the complex degradate before the smoothing treatment to the average particle size ($D_{50}a$) of the smoothed complex degradate ($D_{50}b/D_{50}a$) is preferably 1.0 or more and 100.0 or less.

The production method for a crystalline sulfide solid electrolyte of the eleventh mode of the present embodiment is a production method for a crystalline sulfide solid electrolyte, in which:

the crystalline sulfide solid electrolyte contains a thio-LISICON Region II-type crystal structure.

The production method of the present embodiment is preferred for production of a crystalline sulfide solid electrolyte containing a thio-LISICON Region II-type crystal structure, and is preferred from the viewpoint of improving the ionic conductivity.

The production method for a crystalline sulfide solid electrolyte of the twelfth mode of the present embodiment is a production method for a crystalline sulfide solid electrolyte including:

mixing a raw material inclusion containing at least one selected from a lithium atom, a sulfur atom and a phosphorus atom, and a complexing agent without using a mechanical treating machine to obtain an electrolyte precursor, heating the electrolyte precursor to obtain a complex degradate, mechanically processing the complex degradate to obtain a modified complex degradate, and heating the modified complex degradate.

In the production method of the present embodiment, the complex degradate is mechanically treated to obtain a modified complex degradate, and therefore the method is preferred since the ionic conductivity can be improved with reducing the particle size of the crystalline sulfide solid electrolyte or with keeping the particle size thereof as such.

Hereinunder the production method of the present embodiment is described in more detail with reference to the modes thereof mentioned above.

[Production Method for Sulfide Solid Electrolyte]

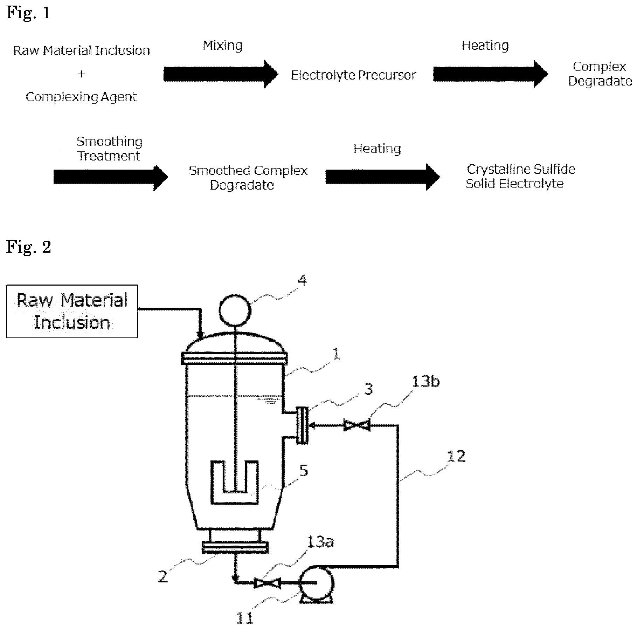

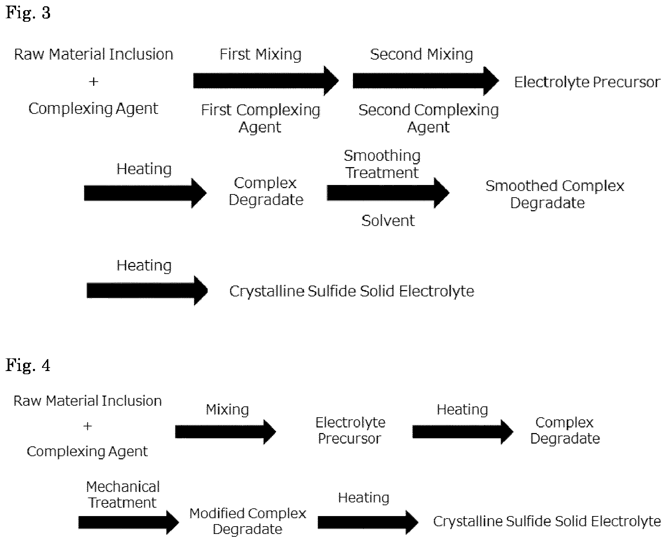

As illustrated in Fig. 1 or Fig. 4, the production method for a sulfide solid electrolyte of the present embodiment needs to include mixing a raw material inclusion containing at least one selected from a lithium atom, a sulfur atom and a phosphorus atom, and a complexing agent without using a mechanical treating machine to obtain an electrolyte precursor, heating the electrolyte precursor to obtain a complex degradate, perform smoothing treatment on the complex degradate to obtain a smoothed complex degradate, and heating the smoothed complex degradate.

<Preparation of Electrolyte Precursor>

"Preparing an electrolyte precursor" in the present embodiment needs to mix a raw material inclusion to be mentioned below and a complexing agent also to be mentioned below. By mixing a raw material inclusion and a complexing agent to complex the raw material inclusion, a complex that contains a lithium atom, a phosphorus atom and a sulfur atom such as $Li_3PS_4$ can be formed even in a liquid phase method or a heterogeneous method, and a homogeneous solid electrolyte can be obtained with suppressing separation of specific components, and the method is preferred.

(Solid Electrolyte)

The "solid electrolyte" as referred to in this description means an electrolyte of keeping the solid state at 25°C in a nitrogen atmosphere. The solid electrolyte in the present embodiment is a solid electrolyte containing a lithium atom, a sulfur atom, a phosphorus atom, and a halogen atom and having an ionic conductivity to be caused owing to the lithium atom.

The "solid electrolyte" includes both the crystalline sulfide solid electrolyte having a crystal structure produced according to the production method of the present embodiment and an amorphous solid electrolyte.

The crystalline sulfide solid electrolyte as referred to in this description is a material that is a solid electrolyte in which peaks derived from the solid electrolyte are observed in an X-ray diffraction pattern in the X-ray diffractometry, and the presence or absence of peaks derived from the raw materials of the solid electrolyte does not matter. That is, the crystalline sulfide solid electrolyte contains a crystal structure derived from the solid electrolyte, in which a part thereof may be a crystal structure derived from the solid electrolyte, or all of them may be a crystal structure derived from the solid electrolyte. The crystalline sulfide solid electrolyte may be one in which an amorphous solid electrolyte is contained in a part thereof so long as it has the X-ray diffraction pattern as mentioned above. In consequence, in the crystalline sulfide solid electrolyte, a so-called glass ceramics which is obtained by heating the amorphous solid electrolyte to a crystallization temperature or higher is contained.

The amorphous solid electrolyte as referred to in this description is a halo pattern in which any other peak than the peaks derived from the materials is not substantially observed in an X-ray diffraction pattern in the X-ray diffractometry, and it is meant that the presence or absence of peaks derived from the raw materials of the solid electrolyte does not matter.

(Mixing)

"Mixing" in the present embodiment needs to be performed without using a mechanical treating machine to be mentioned below. Accordingly, the product can be produced in a simple production line without using any large-size apparatus for grinding, and therefore the production process can be simplified and the energy put in production can be reduced. The mechanical treating machine means a grinding machine to be mentioned below.

One example of mixing without using a mechanical treating machine is mixing with a stirrer and a mixer. For example, employable is a mechanically stirring-type mixer capable of attaining stirring with a stirring blade arranged inside a reactor (this mode can also be referred to as mixing with stirring, or stirring mixing). The mechanically stirring-type mixer includes a high-speed stirring mixer and a double-arm type mixer. The high-speed stirring type mixer includes a vertical axis rotating type mixer and a lateral axis rotating type mixer, and mixers of any of these types can be used.

Examples of a shape of the stirring blade which is used in the mechanically stirring-type mixer include a blade type, an arm type, a buddle type, a full-zone type, a ribbon type, a multistage blade type, a double arm type, a shovel type, a twin-shaft blade type, a flat blade type, and a C type blade type. From the viewpoint of more efficiently promoting the reaction of the raw materials, preferred are a shovel type, a flat blade type, a C type blade type, an anchor type, a paddle type, a full-zone type and the like; and more preferred are an anchor type, a paddle type, and a full-zone type. In a small-scale production mode, also a Schlenk bottle equipped with a stirrer and a separable flask equipped with a rotor blade are preferably employed.

In the case of using a mechanically stirring-type mixer, the rotation number of the stirring blade can be appropriately controlled with no specific limitation and depending on the volume and the temperature of the fluid in the reactor, on the shape of the stirring blade, etc. and can be generally approximately 5 rpm or more and 400 rpm or less, but from the viewpoint of more efficiently promoting the reaction of the raw materials, it is preferably 10 rpm or more and 300 rpm or less, more preferably 15 rpm or more and 250 rpm or less, even more preferably 20 rpm or more and 230 rpm or less.

The temperature condition in mixing with a mixer is not specifically limited and is, for example, generally -30 to 120°C, preferably -10 to 100°C, more preferably 0 to 80°C, even more preferably 10 to 60°C. Mixing with no temperature control from the outside is also preferred. The mixing time is generally 0.1 to 500 hours, and from the viewpoint of making the dispersion condition of the raw materials more uniform to promote the reaction, it is preferably 1 to 450 hours, more preferably 10 to 425 hours, even more preferably 20 to 400 hours, further more preferably 30 to 300 hours.

The mixing can be a mixing in a mode of circulation stirring as shown in Fig. 2, in which the fluid inside the reactor is discharged out from the discharging mouth arranged in the reactor to the outside of the reactor, and the discharged fluid is returned back to the reactor from the returning mouth arranged in the reactor for circulation of the fluid through the reactor. The mixing in a mode of circulation stirring is preferred since the reaction of the raw materials can be promoted without grinding, and since, without any strong stirring to cause fluid spattering to adhesion of the spattered fluid to the inner wall of the reactor, the raw materials having a large specific gravity such as lithium halide can be prevented from depositing in the bottom of the reactor, especially from precipitating just below the stirring blade and the like to stay in the bottom so that composition unevenness of the sulfide solid electrolyte caused by the raw materials not contributing toward the reaction can be prevented, and accordingly, the mixing mode is preferred as efficiently promoting the reaction to obtain a sulfide solid electrolyte having a high ionic conductivity.

The mixing in the present embodiment can be in one operation or can be in two or more operations with varying conditions.

In one operation, preferably, the mixing is carried out using one or more complexing agent selected from the first complexing agent and the second complexing agent to be mentioned below.

In two or more operations, the first mixing and the second mixing can be carried out continuously as shown in Fig. 3, or any other operation can be between the first mixing and the second mixing.

The mixing shown in Fig. 3 can include the first mixing using the first complexing agent to be mentioned below and the second mixing using the second complexing agent differing from the first complexing agent to be mentioned below.

The second mixing is preferably carried out with the second complexing agent to be added after the first mixing, from the viewpoint of simplification of the production process and from the viewpoint of producing a homogeneous solid electrolyte.

(Raw Material Inclusion)

The raw material inclusion for use in the present embodiment needs to contain at least one selected from a lithium atom, a sulfur atom and a phosphorus atom. Further, the raw material inclusion for use in the present embodiment is preferred to contain, as needed, a halogen atom and to be used as a specific crystalline solid electrolyte to be mentioned below, from the viewpoint of improving the ionic conductivity.

More specifically, representative examples include raw materials composed of at least two kinds of atoms selected from the above four kinds of atoms, such as lithium sulfide; lithium halides, e.g., lithium fluoride, lithium chloride, lithium bromide, and lithium iodide; phosphorus sulfides, e.g., diphosphorus trisulfide ($P_2S_3$) and diphosphorus pentasulfide ($P_2S_5$); phosphorus halides, e.g., various phosphorus fluorides (e.g., $PF_3$ and $PF_5$), various phosphorus chlorides (e.g., $PCl_3$, $PCl_5$, and $P_2Cl_4$), various phosphorus bromides (e.g., $PBr_3$ and $PBr_5$), and various phosphorus iodides (e.g., $PI_3$ and $P_2I_4$); and thiophosphoryl halides, e.g., thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichlorofluoride ($PSCl_2F$), and thiophosphoryl dibromofluoride ($PSBr_2F$); as well as halogen simple substances, such as fluorine ($F_2$), chlorine ($Cl_2$), bromine ($Br_2$), and iodine ($I_2$), with bromine ($Br_2$) and iodine ($I_2$) being preferred.

Examples that can be used as the raw material other than those mentioned above include a raw material containing at least one kind of atom selected from the above-mentioned four kinds of atoms, and containing any other atom than those four kinds of atoms, more specifically, lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfide ($SnS$, $SnS_2$), aluminum sulfide, and zinc sulfide; phosphate compounds, such as sodium phosphate and lithium phosphate; halide compounds with an alkali metal other than lithium, such as sodium halides, e.g., sodium iodide, sodium fluoride, sodium chloride, and sodium bromide; metal halides, such as an aluminum halide, a silicon halide, a germanium halide, an arsenic halide, a selenium halide, a tin halogen, an antimony halide, a tellurium halide, and a bismuth halide; and phosphorus oxyhalides, such as phosphorus oxychloride ($POCl_3$) and phosphorus oxybromide ($POBr_3$).

Among the above, phosphorus sulfides, such as lithium sulfide, diphosphorus trifluoride ($P_2S_3$), and diphosphorus pentasulfide ($P_2S_5$); halogen simple substances, such as fluorine ($F_2$), chlorine ($Cl_2$), bromine ($Br_2$), and iodine ($I_2$); and lithium halides, such as lithium fluoride, lithium chloride, lithium bromide, and lithium iodide are preferred. In the case where an oxygen atom is introduced into the solid electrolyte, preferred are lithium oxide, lithium hydroxide and a phosphate compound such as lithium phosphate. Preferred examples of a combination of raw materials include a combination of lithium sulfide, diphosphorus pentasulfide, and a lithium halide; and a combination of lithium sulfide, diphosphorus pentasulfide, and a halogen simple substance, in which the lithium halide is preferably lithium bromide or lithium iodide, and the halogen simple substance is preferably bromine or iodine.

In the present embodiment, $Li_3PS_4$ that contains a $PS_4$ structure can be used as a part of the raw material. Specifically, $Li_3PS_4$ is prepared by production or the like in advance and this is used as the raw material.

The content of $Li_3PS_4$ to the total raw material is preferably 60 to 100 mol%, more preferably 65 to 90 mol%, even more preferably 70 to 80 mol%.

In the case where $Li_3PS_4$ and a halogen simple substance are used, the ratio of the halogen simple substance to $Li_3PS_4$ is preferably 1 to 50 mol%, more preferably 10 to 40 mol%, even more preferably 20 to 30 mol%, further more preferably 22 to 28 mol%.

The lithium sulfide which is used in the present embodiment is preferably a particle.

An average particle diameter ($D_{50}$) of the lithium sulfide particle is preferably 10 μm or more and 2,000 μm or less, more preferably 30 μm or more and 1,500 μm or less, and still more preferably 50 μm or more and 1,000 μm or less. In this description, the average particle diameter ($D_{50}$) is a particle diameter to reach 50% of all the particles in sequential cumulation from the smallest particles in drawing the particle diameter distribution cumulative curve, and the volume distribution is concerned with an average particle diameter which can be, for example, measured with a laser diffraction/scattering particle diameter distribution measuring device. In addition, among the above-exemplified raw materials, the solid raw material is preferably a material having an average particle diameter of the same degree as that of the above lithium sulfide particle, namely a material having an average particle diameter falling within the same range as that of the above lithium sulfide particle is preferred.

In the case of using lithium sulfide, diphosphorus pentasulfide, and the lithium halide as the raw materials, from the viewpoint of obtaining higher chemical stability and a higher ionic conductivity, a proportion of lithium sulfide relative to the total of lithium sulfide and diphosphorus pentasulfide is preferably 70 to 80 mol%, more preferably 72 to 78 mol%, and still more preferably 74 to 78 mol%.

In the case of using lithium sulfide, diphosphorus pentasulfide, a lithium halide, and other raw material to be optionally used, the content of lithium sulfide and diphosphorus pentasulfide relative to the total of the above raw materials is preferably 60 to 100 mol%, more preferably 65 to 90 mol%, and still more preferably 70 to 80 mol%.

In the case of using a combination of lithium bromide and lithium iodide as the lithium halide, from the viewpoint of enhancing the ionic conductivity, a proportion of lithium bromide relative to the total of lithium bromide and lithium iodide is preferably 1 to 99 mol%, more preferably 20 to 90 mol%, still more preferably 40 to 80 mol%, and especially preferably 50 to 70 mol%.

In the case of using not only a halogen simple substance but also lithium sulfide and diphosphorus pentasulfide as the raw materials, a proportion of the molar number of lithium sulfide excluding lithium sulfide having the same molar number as the molar number of the halogen simple substance relative to the total molar number of lithium sulfide and diphosphorus pentasulfide excluding lithium sulfide having the same molar number as the molar number of the halogen simple substance falls preferably within a range of 60 to 90%, more preferably within a range of 65 to 85%, still more preferably within a range of 68 to 82%, yet still more preferably within a range of 72 to 78%, and even yet still more preferably within a range of 73 to 77%. This is because when the foregoing proportion falls within the above ranges, a higher ionic conductivity is obtained.

In addition, in the case of using lithium sulfide, diphosphorus pentasulfide, and a halogen simple substance, from the same viewpoint, the content of the halogen simple substance relative to the total amount of lithium sulfide, diphosphorus pentasulfide, and the halogen simple substance is preferably 1 to 50 mol%, more preferably 2 to 40 mol%, still more preferably 3 to 25 mol%, and yet still more preferably 3 to 15 mol%.

In the case of using lithium sulfide, diphosphorus pentasulfide, a halogen simple substance, and a lithium halide, the content (a mol%) of the halogen simple substance and the content ($\beta$ mol%) of the lithium halide relative to the total of the above raw materials preferably satisfies the following expression (2), more preferably satisfies the following expression (3), still more preferably satisfies the following expression (4), and yet still more preferably satisfies the following expression (5).

$$2 \le (2\alpha + \beta) \le 100 \qquad (2)$$

$$4 \le (2\alpha + \beta) \le 80 \qquad (3)$$

$$6 \le (2\alpha + \beta) \le 50 \qquad (4)$$

$$6 \le (2\alpha + \beta) \le 30 \qquad (5)$$

In the case of using two halogen simple substances, when the molar number in the substance of the halogen atom of one side is designated as A1, and the molar number in the substance of the halogen atom of the other side is designated as A2, an A1:A2 ratio is preferably 1 to 99:99 to 1, more preferably 10:90 to 90:10, still more preferably 20:80 to 80:20, and yet still more preferably 30:70 to 70:30.

In the case where the two halogen simple substances are bromine and iodine, when the molar number of bromine is designated as B1, and the molar number of iodine is designated as B2, a B1:B2 ratio is preferably 1 to 99:99 to 1, more preferably 15:85 to 90:10, still more preferably 20:80 to 80:20, yet still more preferably 30:70 to 75:25, and especially preferably 35:65 to 75:25.

In the case of mixing a complexing agent to be mentioned below and the raw material inclusion, preferably the raw material mixture is mixed in the form of a slurry with a solvent to be mentioned below since the raw material mixture can form a uniform complex.

(Complexing Agent)

Regarding the complexing agent for use in the present embodiment, one kind alone or two or more kinds can be used. In the case where two or more kinds are used, preferably, a first complexing agent and a second complexing agent are used. Preferably, the first complexing agent is a complexing agent capable of forming a complex containing $Li_3PS_4$ and a halogen atom and the second complexing agent is a complexing agent capable of forming a complex containing $Li_3PS_4$. This is because formation of $Li_3PS_4$ may be delayed only by the use of the first complexing agent but the formation of $Li_3PS_4$ can be promoted by the use of the second complexing agent, and therefore a homogeneous solid electrolyte can be produced and this is preferred from the viewpoint of improving the ionic conductivity.

The amount of the complexing agent to be added in the case where the mixing in this embodiment is carried out in one operation, as well as the total amount of the complexing agents to be added in the case where the mixing is carried out in two or more operations is, from the viewpoint of efficiently forming the complex, preferably such that the molar ratio of the amount added of the complexing agent to the total molar amount of the Li atom contained in two or more kinds of the raw material compounds is 0.5 or more and 7.0 or less, more preferably 0.6 or more and 5.5 or less, even more preferably 0.8 or more and 3.5 or less. The amount of the complexing agent to be used in each operation in the case where the mixing is carried out in two or more operations will be described later.

(First Complexing Agent)

In the present description, the first complexing agent is a complexing agent capable of forming a complex containing $Li_3PS_4$ obtained from $Li_2S$ $P_2S_5$ and the like that are preferably used as the raw materials for the solid electrolyte and a halogen atom, preferably having an ability to form $Li_3PS_4$, and capable of forming a complex that can contain the formed $Li_3PS_4$ and a halogen atom, and this is used in the first process.

Any compound having the above-mentioned performance can be used as the first complexing agent with no specific limitation, and preferred is a compound having an atom especially having a high affinity for a lithium atom, for example, a hetero atom such as a nitrogen atom, an oxygen atom and a chlorine atom, and more preferred is a compound having a group containing these hetero atoms. This is because these hetero atoms and the group containing the hetero atom can coordinate (bond) to lithium.

The hetero atom existing in the molecule of the first complexing agent has a high affinity for a lithium atom, and is considered to bond to the raw materials that contain a lithium atom and a halogen atoms such as $Li_3PS_4$ containing a $PS_4$ structure of the main backbone of the solid electrolyte produced in the present embodiment and a lithium halide, thereby readily forming a complex. Consequently, it is considered that, by mixing the raw materials and the first complexing agent, the complex is formed and can be precipitated while keeping the dispersion condition of various components even in the precipitation process, and therefore an electrolyte precursor with a halogen atom more uniformly dispersed and fixed therein (hereinunder one produced by mixing the raw material inclusion containing at least one selected from a lithium atom, a sulfur atom and a phosphorus atom and the complexing agent is also referred to as an electrolyte precursor) can be produced, and as a result, a solid electrolyte having a high ionic conductivity can be produced.

Consequently, the first complexing agent preferably contains at least two hetero atoms that each capable of forming a coordination site (bonding site) in the molecule, more preferably has a group containing at least two hetero atoms in the molecule. Having a group containing at least two hetero atoms in the molecule, the first complexing agent can bond the raw materials containing lithium and halogen such as $Li_3PS_4$ and a lithium halide via the at least two hetero atoms in the molecule. Among the hetero atoms, a nitrogen atom is preferred, and an amino group is preferred as the group containing a nitrogen atom. Specifically, an amine compound is preferred as the complexing agent.

Any amine compound having an amino group in the molecule is employable with no specific limitation since it can promote complex formation, but a compound having at least two amino groups in the molecule is preferred. Having such a structure, the compound can bond the raw materials containing lithium and halogen such as $Li_3PS_4$ and a lithium halide via the at least two nitrogen atoms in the molecule.

Examples of such amine compounds include amine compounds such as an aliphatic amine, an alicyclic amine, a heterocyclic amine and an aromatic amine, and one alone or plural kinds thereof can be used either singly or as combined.

More specifically, representative preferred examples of the aliphatic amine include an aliphatic diamine, such as an aliphatic primary diamine such as ethylenediamine, diaminopropane, and diaminobutane; an aliphatic secondary diamine such as N,N'-dimethylethylenediamine, N,N'-diethylethylenediamine, N,N'-dimethyldiaminopropane, and N,N'-diethyldiaminopropane; and an aliphatic tertiary diamine such as N,N,N',N'-tetramethyldimethylmethane, N,N,N',N'-tetramethylethylenediamine, N,N,N',N'-tetraethylethylenediamine, N,N,N',N'-tetramethyldiaminopropane, N,N,N',N'-tetraethyldiaminopropane, N,N,N',N'-tetramethyldiaminobutane, N,N,N',N'-tetramethyldiaminopentane, and N,N,N',N'-tetramethyldiaminohexane. Here, regarding exemplification in the present description, for example, diaminobutane indicates, unless otherwise specifically noted, all isomers including isomers relating to the position of the amino group such as 1,2-diaminobutane, 1,3-diaminobutane and 1,4-diaminobutane, and in addition thereto, linear and branched isomers relating to butane.

The carbon number of the aliphatic amine is preferably 2 or more, more preferably 4 or more, even more preferably 6 or more, and the upper limit is 10 or less, more preferably 8 or less, even more preferably 7 or less. The carbon number of the aliphatic hydrocarbon group in the aliphatic amine is preferably 2 or more, and the upper limit is preferably 6 or less, more preferably 4 or less, even more preferably 3 or less.

Representative preferred examples of the alicyclic amine include an alicyclic diamine, such as an alicyclic primary diamine such as cyclopropanediamine, and cyclohexanediamine; an alicyclic secondary diamine such as bisaminomethylcyclohexane; and an alicyclic tertiary diamine such as N,N,N',N'-tetramethyl-cyclohexanediamine, and bis(ethylmethylamino)cyclohexane. Representative preferred examples of the heterocyclic amine include a heterocyclic diamine, such as a heterocyclic primary diamine such as isophoronediamine; a heterocyclic secondary diamine such as piperazine, and dipiperidylpropane; and a heterocyclic tertiary diamine such as N,N-dimethylpiperazine, and bismethylpiperidylpropane.

The carbon number of the alicyclic amine and the heterocyclic amine is preferably 3 or more, more preferably 4 or more, and the upper limit is preferably 16 or less, more preferably 14 or less.

Representative preferred examples of the aromatic amine include an aromatic diamine, such as an aromatic primary diamine such as phenyldiamine, triethylenediamine and naphthalenediamine; an aromatic secondary diamine such as N-methylphenylenediamine, N,N'-dimethylphenylenediamine, N,N'-bismethylphenylphenylenediamine, N,N'-dimethylnaphthalenediamine, N-naphthylethylenediamine; and an aromatic tertiary diamine such as N,N-dimethylphenylenediamine, N,N,N',N'-tetramethylphenylenediamine, N,N,N',N'-tetramethyldiaminodiphenylethane, and N,N,N',N'-tetramethylnaphthalene.

The carbon number of the aromatic amine is preferably 6 or more, more preferably 7 or more, even more preferably 8 or more, and the upper limit is preferably 16 or less, more preferably 14 or less, even more preferably 12 or less.

The amine compound for use in the present embodiment can be substituted with a substituent such as an alkyl group, an alkenyl group, an alkoxy group, a hydroxy group or a cyano group, or a halogen atom.

Diamines are exemplified as specific examples, but needless-to-say, the amine compound for use in the present embodiment is not limited to diamines. For example, employable here are monoamines, such as trimethylamine, triethylamine, ethyldimethylamine, and aliphatic monoamines corresponding to various diamines such as the above-mentioned aliphatic diamines, as well as piperidine compounds such as piperidine, methylpiperidine and tetramethylpiperidine, pyridine compounds such as pyridine and picoline, morpholine compounds such as morpholine, methylmorpholine, and thiomorpholine, imidazole compounds such as imidazole and methylimidazole, alicyclic monoamines such as monoamines corresponding to the above-mentioned alicyclic diamines, heterocyclic monoamines corresponding to the above-mentioned heterocyclic diamines, and aromatic monoamines corresponding to the above-mentioned aromatic diamines, and also polyamines having 3 or more amino groups such as diethylenetriamine, N,N',N"-trimethyldiethylenetriamine, N,N,N',N",N"-pentamethyldiethylenetriamine, triethylenetetramine, N,N'-bis[(dimethylamino)ethyl]-N,N'-dimethylethylenediamine, hexamethylenetetramine, and tetraethylenepentamine.

Among the above, from the viewpoint of attaining a higher ionic conductivity, preferred is a tertiary amine having a tertiary amino group as the amino group, more preferred is a tertiary diamine having two tertiary amino groups, even more preferred is a tertiary diamine having two tertiary amino groups at both ends, and further more preferred is an aliphatic tertiary diamine having tertiary amino groups at both ends. Of the above-mentioned amine compounds, as the aliphatic tertiary diamine having tertiary amino groups at both ends, preferred are tetramethylethylenediamine, tetraethylethylenediamine, tetramethyldiaminopropane and tetraethyldiaminopropane, and in consideration of easy availability, preferred are tetramethylethylenediamine and tetramethyldiaminopropane.

Compounds having any other group than an amino group, containing a nitrogen atom as a hetero atom, for example, those having a group such as a nitro group or an amide group can also provide the same effects as above.

The amount to be added of the first complexing agent is, from the viewpoint of efficiently forming a complex, preferably such that the molar ratio of the amount added of the first complexing agent relative to the total molar amount of Li atoms contained in two or more of the above-mentioned raw material compounds is 0.1 or more and 2.0 or less, more preferably 0.5 or more and 1.5 or less, even more preferably 0.8 or more and 1.2 or less, most preferably 1.0.

(Second Complexing Agent)

In the present description, the second complexing agent is preferably a complexing agent except the first complexing agent and capable of forming a complex containing $Li_3PS_4$ obtained from $Li_2S$ and $P_2S_5$ preferably used as the raw materials for the solid electrolyte. In particular, the second complexing agent indicates one having a high velocity for forming $Li_3PS_4$ as compared with the first complexing agent.

By further mixing the second complexing agent after mixing the first complexing agent, the reaction of forming $Li_3PS_4$, which may be retarded by merely mixing the first complexing agent, can be promoted without delay.

The reason why this can be achieved is not clear, but the following hypothesis is conceivable.

Specifically, the first complexing agent is excellent in the balance of the ability to form $Li_3PS_4$ and the ability to form a complex containing $Li_3PS_4$ and a halogen atom, but is inferior in the ability to form $Li_3PS_4$ as compared with the second complexing agent, and therefore, when the concentration of $Li_2S$ existing in the system lowers with progress of the formation reaction of $Li_3PS_4$, then the velocity of $Li_3PS_4$ formation reaction lowers, and the formation gradually retards. However, by further mixing the second complexing agent excellent in the ability to form $Li_3PS_4$ as compared with the first complexing agent, after mixing the first complexing agent, the $Li_3PS_4$ formation reaction can be again accelerated even though the concentration of $Li_2S$ existing in the reaction site is low. In that case where the first complexing agent that is excellent in the ability to form a complex containing $Li_3PS_4$ and a halogen atom as compared with the second complexing agent, the characteristics of both the first complexing agent and the second complexing agent can be exploited to further promote the $Li_3PS_4$ formation reaction and, in addition, the complex containing $Li_3PS_4$ and a halogen atom formed can be formed without delay.

As the second complexing agent, any one having the above-mentioned properties can be used with no specific limitation, and especially preferred is a compound that contains an atom having a high affinity for a lithium atom, for example, a hetero atom such as a nitrogen atom, an oxygen atom and a chlorine atom, and more preferred is a compound having a group containing these hetero atoms. This is because these hetero atoms and the group containing the hetero atom can coordinate (bond) to lithium.

The hetero atom existing in the molecule of the second complexing agent has a high affinity for a lithium atom, and is considered to bond to $Li_3PS_4$ containing a $PS_4$ structure of the main backbone of the solid electrolyte produced in the present embodiment, thereby having an ability to readily form a complex. Consequently, it is considered that, by mixing the raw materials and the second complexing agent, formation of the complex containing $Li_3PS_4$ can be accel-

erated.

Among the hetero atom, an oxygen atom is preferred, and the group containing an oxygen atom preferably has one or more functional groups selected from ether groups and ester groups, and among them, especially preferred are ether groups. Specifically, the complexing agent is especially preferably an ether compound. In relation to the first complexing agent, the second complexing agent is preferably one not containing a nitrogen atom as the hetero atom. Accordingly, in the present embodiment, preferably, one having a nitrogen atom as the hetero atom is employed as the first complexing agent, and also preferably one not containing a nitrogen atom but containing an oxygen atom as the hetero atom is employed as the second complexing agent. With that, the function of the first complexing agent already mentioned above and that of the second complexing agent can be effectively exploited, and the ionic conductivity of the resultant solid electrolyte can be thereby increased.

Examples of the ether compound include an aliphatic ether, an alicyclic ether, a heterocyclic ether and an aromatic ether, and one alone or plural kinds of these can be used either singly or as combined.

More specifically, the aliphatic ether includes a monoether such as dimethyl ether, diethyl ether, diisopropyl ether, dibutyl ether, and a tert-butyl methy lether; a diether such as dimethoxymethane, dimethoxyethane, diethoxymethane and diethoxyethane; a polyether having three or more ether groups such as diethylene glycol dimethyl ether (diglyme), and triethylene oxide glycol dimethyl ether (triglyme); and a hydroxy group-containing ether such as diethylene glycol, and triethylene glycol.

The carbon number of the aliphatic ether is preferably 2 or more, more preferably 3 or more, even more preferably 4 or more, and the upper limit is preferably 10 or less, more preferably 8 or less, even more preferably 6 or less.

The carbon number of the aliphatic hydrocarbon group in the aliphatic ether is preferably 1 or more, and the upper limit is preferably 6 or less, more preferably 4 or less, even more preferably 3 or less.

The alicyclic ether includes ethylene oxide, propylene oxide, tetrahydrofuran, tetrahydropyran, dimethoxytetrahydrofuran, cyclopentyl methyl ether, dioxane and dioxolane. The heterocyclic ether includes furan, benzofuran, benzopyran, dioxene, dioxine, morpholine, methoxyindole, and hydroxymethyldimethoxypyridine.

The carbon number of the alicyclic ether and the heterocyclic ether is preferably 3 or more, more preferably 4 or more, and the upper limit is preferably 16 or less, more preferably 14 or less.

The aromatic ether includes methyl phenyl ether (anisole), ethyl phenyl ether, dibenzyl ether, diphenyl ether, benzyl phenyl ether, and naphthyl ether.

The carbon number of the aromatic ether is preferably 7 or more, more preferably 8 or more, and the upper limit is preferably 16 or less, more preferably 14 or less, even more preferably 12 or less.

The ether compound for use in the present embodiment can be substituted with a substituent such as an alkyl group, an alkenyl group, an alkoxy group, a hydroxy group or a cyano group, or a halogen atom.

As the ether compound for use in the present embodiment, from the viewpoint of attaining a higher ionic conductivity, preferred is an aliphatic ether, and more preferred are dimethoxyethane and tetrahydrofuran.

Examples of the ester compound include an ester compound such as an aliphatic ester, an alicyclic ester, a heterocyclic ester and an aromatic ester. One alone or plural kinds of these can be used either singly or as combined.

More specifically, the aliphatic ester includes formates such as methyl formate, ethyl formate and triethyl formate; acetates such as methyl acetate, ethyl acetate, propyl acetate, isopropyl acetate, butyl acetate and isobutyl acetate; propionates such as methyl propionate, ethyl propionate, propyl propionate and butyl propionate; oxalates such as dimethyl oxalate and diethyl oxalate; malonates such as dimethyl malonate and diethyl malonate; and succinates such as dimethyl succinate and diethyl succinate.

The carbon number of the aliphatic ester is preferably 2 or more, more preferably 3 or more, even more preferably 4 or more, and the upper limit is preferably 10 or less, more preferably 8 or less, even more preferably 7 or less. The carbon number of the aliphatic hydrocarbon group in the aliphatic ester is preferably 1 or more, more preferably 2 or more, and the upper limit is preferably 6 or less, more preferably 4 or less, even more preferably 3 or less.

The alicyclic ester includes methyl cyclohexanecarboxylate, ethyl cyclohexanecarboxylate, dimethyl cyclohexanedicarboxylate, dibutyl cyclohexanedicarboxylate, and dibutyl cyclohexenedicarboxylate. The heterocyclic ester includes methyl pyridinecarboxylate, ethyl pyridinecarboxylate, propyl pyridinecarboxylate, methyl pyrimidinecarboxylate, ethyl pyrimidinecarboxylate, as well as lactones such as acetolactone, propiolactone, butyrolactone and valerolactone.

The carbon number of the alicyclic ester and the heterocyclic ester is preferably 3 or more, more preferably 4 or more, and the upper limit is preferably 16 or less, more preferably 14 or less.

The aromatic ester includes benzoates such as methyl benzoate, ethyl benzoate, propyl benzoate and butyl benzoate; phthalates such as dimethyl phthalate, diethyl phthalate, dibutyl phthalate, butylbenzyl phthalate, and dicyclohexyl phthalate; and trimellitates such as trimethyl trimellitate, triethyl trimellitate, tripropyl trimellitate, tributyl trimellitate and trioctyl trimellitate.

The carbon number of the aromatic ester is preferably 8 or more, more preferably 9 or more, and the upper limit is preferably 16 or less, more preferably 14 or less, even more preferably 12 or less.

The ester compound for use in the present embodiment can be substituted with a substituent such as an alkyl group, an alkenyl group, an alkoxy group, a hydroxy group or a cyano group, or a halogen atom.

As the ester compound for use in the present embodiment, from the viewpoint of attaining a higher ionic conductivity, preferred is an aliphatic ester, more preferred are acetates, and even more preferred is ethyl acetate.

In the present embodiment, preferably, the second complexing agent is mixed after the complex forming reaction with the first complexing agent has proceeded to a certain degree.

The method of determining a good timing of adding the second complexing agent is not specifically limited. For example, in the case of using lithium sulfide as one starting material, the second complexing agent can be added at the timing at which the remaining amount of lithium sulfide existing in the system has lowered to a certain value for exhibiting a higher effect.

Specifically, by adding the second complexing agent after the remaining amount of lithium sulfide has lowered to 35 mol% or less relative to the amount initially added thereof, more preferably 30 mol% or less, even more preferably 25 mol% or less, the complex forming reaction can be accelerated more. The amount of lithium sulfide remaining in the system can be measured according to the method described in Examples.

The amount to be added of the second complexing agent is, from the viewpoint of efficiently forming the complex, preferably such that the molar ratio of the amount added of the second complexing agent, relative to the total molar amount of $Li_3PS_4$ capable of being formed from the above-mentioned two or more raw material inclusions, is 1.0 or more and 5.0 or less, more preferably 2.0 or more and 4.0 or less, even more preferably 2.5 or more and 3.5 or less.

By mixing the raw material and the complexing agent, owing to an action of the lithium atom, the sulfur atom, the phosphorus atom, and the halogen atom, all of which are contained in the raw materials, with the complexing agent, an electrolyte precursor in which these atoms are bonded directly with each other via and/or not via the complexing agent is obtained. That is, in the production method of a solid electrolyte of the present embodiment, the complex obtained through mixing of the raw material and the complexing agent is constituted of the complexing agent, the lithium atom, the sulfur atom, the phosphorus atom, and the halogen atom. In the present embodiment, the resultant complex is not completely dissolved in the complexing agent that is liquid, but is generally solid, and therefore in the present embodiment, the complex and a suspension containing the complex suspended in a solvent optionally added are obtained. In consequence, the production method for the solid electrolyte of the present embodiment is corresponding to a heterogeneous system in a so-called liquid-phase method.

(Solvent)

In the present embodiment, a solvent can be further added in mixing the raw material and the complexing agent.

In forming a complex that is solid in the complexing agent that is liquid, when the complex can readily dissolve in the complexing agent, component separation may occur. Accordingly, by using a solvent that does not dissolve the complex, dissolution of the component in the electrolyte precursor can be prevented. In addition, by mixing the raw material inclusion and the complexing agent using a solvent, complex formation can be accelerated so that each main component can be made to exist evenly to obtain an electrolyte precursor where halogen atoms are more dispersed and fixed and, as a result, an effect of providing a higher ionic conductivity can be more readily exhibited.

The production method for a solid electrolyte of the present embodiment is a so-called heterogeneous method, in which preferably the complex does not completely dissolve in the complexing agent that is liquid but can precipitate. By adding a solvent, complex dissolution can be controlled. In particular, halogen atoms readily dissolve out from the complex, and by adding a solvent, a desired complex can be obtained while dissolution of halogen atom is retarded. As a result, it is preferable that, via an electrolyte precursor where components such as halogens are dispersed, a crystalline sulfide solid electrolyte having a high ionic conductivity can be obtained.

The solvent having such properties is preferably a solvent having a solubility parameter of 10 or less. In the present description, the solubility parameter is described in various documents, for example, "Chemical Handbook" (issued in 2004, revised 5th edition, Maruzen Corporation), and is a value $\delta$ ($(cal/cm^3)^{1/2}$) calculated according to the following mathematical formula (1), and this is also referred to as a Hildebrand parameter, SP value.

$$\delta = \sqrt{(\Delta H - RT)/V} \qquad (1)$$

In the mathematical formula (1), $\Delta H$ is a molar heat generation, R is a vapor constant, T is a temperature, V is a molar volume.

By using a solvent having a solubility parameter of 10 or less, a halogen atom and the raw materials containing a halogen atom such as lithium halide, and further a component containing a halogen atom that constitutes a co-crystal contained in the complex (for example, an aggregate of a lithium halide and the complexing agent bonding thereto) can be made to be hardly soluble, relatively as compared the above-mentioned complexing agent, and therefore halogen atoms can be readily fixed in the complex so that in the resultant electrolyte precursor and further in the solid electrolyte halogen atoms can exist in a well dispersed state, and a solid electrolyte having a high ionic conductivity can be readily obtained. Specifically, it is desirable that the solvent for use in the present embodiment does not dissolve the complex. From the same viewpoint, the solubility parameter of the solvent is preferably 9.5 or less, more preferably 9.0 or less, even more preferably 8.5 or less.

More specifically, a solvent heretofore widely used in solid electrolyte production can be employed as the solvent in the present embodiment and is preferably at least one selected from a non-polar solvent and an aprotic polar solvent. Among these, it is preferable that one whose solubility parameter falls within the above range is appropriately selected and used, and examples thereof include a hydrocarbon solvent such as an aliphatic hydrocarbon solvent, an alicyclic hydrocarbon solvent and an aromatic hydrocarbon solvent; and an alcohol solvent, an ester solvent, an aldehyde solvent, a ketone solvent, an ether solvent in which one side has a carbon number of 4 or more, and a solvent containing a carbon atom, such as a solvent containing a carbon atom and a hetero atom. Among these, it is preferable that one whose solubility parameter falls within the above range is appropriately selected and used.

More specifically, the solvent includes an aliphatic hydrocarbon solvent such as hexane (7.3), pentane (7.0), 2-ethylhexane, heptane (7.4), octane (7.5), decane, undecane, dodecane, and tridecane; an alicyclic hydrocarbon solvent such as cyclohexane (8.2), and methylcyclohexane; an aromatic hydrocarbon solvent such as benzene, toluene (8.8), xylene (8.6), mesithylene, ethylbenzene (8.8), tert-butylbenzene, trifluoromethylbenzene, nitrobenzene, chlorobenzene (9.5), chlorotoluene (8.8), and bromobenzene; an alcohol solvent such as ethanol (12.7), and butanol (11.4); an aldehyde solvent such as formaldehyde, acetaldehyde (10.3), and dimethylformamide(12.1); a ketone solvent such as acetone (9.9), and methyl ethyl ketone; an ether solvent such as dibutyl ether, cyclopentyl methyl ether (8.4), tert-butyl methyl ether, and anisole; and a solvent containing a carbon atom and a hetero atom such as acetonitrile (11.9), dimethyl sulfoxide, and carbon disulfide. In the above exemplification, the numeral value in the parenthesis is an SP value.

Among these solvents, preferred are an aliphatic hydrocarbon solvent, an alicyclic hydrocarbon solvent, an aromatic hydrocarbon solvent, and an ether solvent; and from the viewpoint of more stably attaining a high ionic conductivity, more preferred are heptane, cyclohexane, toluene, ethylbenzene, diethyl ether, diisopropyl ether, dibutyl ether, dimethoxyethane, cyclopentyl methyl ether, tert-butyl methyl ether, and anisole; even more preferred are diisopropyl ether, and dibutyl ether; and cyclohexane is especially preferred. The solvent for use in the present embodiment is an organic solvent of the above-mentioned exemplifications and is an organic solvent differing from the above-mentioned complexing agent. In the present embodiment, one alone or plural kinds of these solvents can be used either singly or as combined.


(Drying)


In the present embodiment, the electrolyte precursor is a suspension in many cases, and therefore a drying process can be included. According to this, a powder of the electrolyte precursor is obtained. By performing drying before heating to be mentioned below, it becomes possible to efficiently perform heating, and the mode is preferred. The drying and the subsequent heating may be performed in the same process.

The drying can be performed at a temperature depending on the kind of the complexing agent and the solvent remaining in the electrolyte precursor. For example, the drying can be performed at a temperature of the boiling point or higher of the complexing agent and the solvent. In addition, the drying can be performed through drying under reduced pressure (vacuum drying) using a vacuum pump or the like at typically 5 to 100°C, preferably 10 to 85°C, more preferably 15 to 70°C, and still more preferably around room temperature (23°C) (for example, (room temperature) ± about 5°C), to volatilize the complexing agent and the solvent.

Different from the complexing agent, the solvent can hardly be taken in the complex, and therefore the solvent taken in the complex is generally 3% by mass or less, preferably 2% by mass or less, even more preferably 1% by mass or less.

The drying can be performed by filtration using a glass filer, solid-liquid separation though decantation, or solid-liquid separation with a centrifuge and the like. In the present embodiment, after performing the solid-liquid separation, the drying can be performed under the above temperature condition.

Specifically, for the solid-liquid separation, decantation in which the suspension is transferred into a container, and after solid precipitation, the complexing agent and the optionally-added solvent that are to be supernatants are removed, or filtration with a glass filter having a pore size of, for example, about 10 to 200 $\mu$m, and preferably 20 to 150 $\mu$m, is easy.

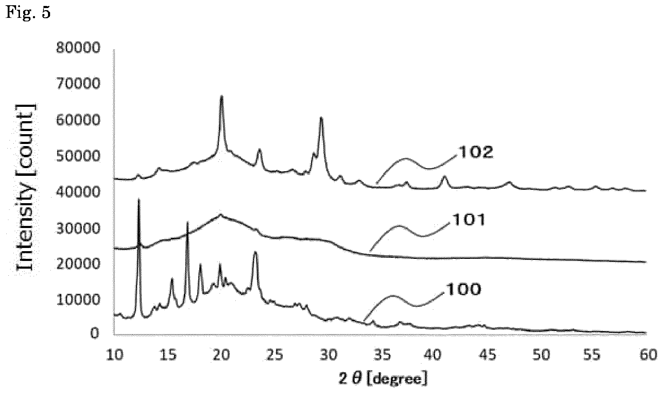

The complex is constituted of the complexing agent, a lithium atom, a sulfur atom, a phosphorus atom, and a halogen atom, and is characterized in that, on the X-ray diffraction pattern in the X-ray diffractometry, peaks different from raw materials-derived peaks are observed, and preferably the complex contains a co-crystal composed of the complexing agent, a lithium atom, a sulfur atom, a phosphorus atom, and a halogen atom. By merely mixing raw materials, peaks derived from the raw materials are only observed, but by mixing raw materials and the complexing agent, peaks different from the raw materials-derived peaks are observed, and from this, it is known that the complex has a structure obviously different from the raw materials themselves contained in the raw materials. This is specifically confirmed in Examples. Fig. 5 shows a measured example of the X-ray diffraction pattern of an electrolyte precursor (complex). The count in the drawing indicates intensity. From the X-ray diffraction patterns, it is known that the complex has a specific crystal structure.

Also the electrolyte precursor is characterized by having a structure different from a crystalline solid electrolyte. This is also specifically confirmed in Examples. Fig. 5 also shows an X-ray diffraction pattern of a crystalline sulfide solid electrolyte (1) 102 in Example 1, and it is known that this differs from the diffraction pattern of an electrolyte precursor (1) 100. The electrolyte precursor (1) 100 has a given crystal structure, and also differs from an amorphous complex degradate (1) 101 having a broad pattern as in Fig. 5.

The content of the complexing agent in the electrolyte precursor differs depending on the molecular weight of the complexing agent, but is generally approximately 10% by mass or more and 70% by mass or less, preferably 15% by mass or more and 65% by mass or less.

<Obtaining Complex Degradate>

The present embodiment needs to obtain a complex degradate by heating the electrolyte precursor.

(Heating)

The production method for a solid electrolyte of the present embodiment needs to obtain an (amorphous or crystalline) complex degradate by heating the electrolyte precursor, or to prepare a crystalline sulfide solid electrolyte by heating a smoothed complex degradate or a modified complex degradate to be mentioned hereinunder.

Including the process of heating the electrolyte precursor to remove the complexing agent from the electrolyte precursor, the process gives a complex degradate containing a lithium atom, a sulfur atom, a phosphorus atom and optionally a halogen atom. Here, the fact that the complexing agent is removed from the electrolyte precursor is obvious from the results of the X-ray diffraction pattern and gas chromatography which confirm that the complexing agent constitute a co-crystal with an electrolyte precursor. In addition to this, the fact is supported by the fact that the X-ray diffraction pattern of the solid electrolyte obtained by removal of the complexing agent achieved by heating the electrolyte precursor is the same as that of the solid electrolyte obtained according to a conventional method not using a complexing agent.

In the present embodiment, the complex degradate is obtained by heating the electrolyte precursor to remove the complexing agent from the electrolyte precursor, and it is preferred that the content of the complexing agent in the complex degradate is as small as possible. However, the complexing agent can be contained to an extent that the performance of the complex degradate is not impaired. The content of the complexing agent in the complex degradate can be typically 10% by mass or less, and it is preferably 5% by mass or less, more preferably 3% by mass or less, and still more preferably 1% by mass or less.

In the present embodiment, the crystalline sulfide solid electrolyte can be obtained by heating a smoothed complex degradate or a modified complex degradate to be crystallized.

Heretofore, for obtaining a crystalline sulfide solid electrolyte having a high ionic conductivity, it is necessary to prepare an amorphous solid electrolyte by mechanical grinding treatment such as mechanical grinding, or by any other melting and quenching treatment and then to heating the amorphous solid electrolyte. However, in the production method of the present embodiment, in obtaining an electrolyte precursor, a mechanical grinding treatment or any other melting and quenching treatment is not carried out, and by performing mechanical treatment including smoothing treatment to be mentioned below, and with pulverizing a sulfide solid electrolyte, a sulfide solid electrolyte having a high ionic conductivity can be obtained, and accordingly, it can be said that the method of the present embodiment is superior to the production method with conventional mechanical milling treatment.

For example, in the case of obtaining the complex degradate, the heating temperature of the electrolyte precursor may be determined according to the structure of the complex degradate which is obtained by heating the electrolyte precursor. Specifically, the heating temperature may be determined by subjecting the electrolyte precursor to differential thermal analysis (DTA) with a differential thermal analysis device (DTA device) under a temperature rise condition of 10°C/min and adjusting the temperature to a range of preferably 5°C or lower, more preferably 10°C or lower, and still more preferably 20°C or lower starting from a peak top temperature of the exothermic peak detected on the lowermost temperature side. Although a lower limit thereof is not particularly restricted, it may be set to a temperature of about a peak top temperature of the exothermic peak detected on the lowermost temperature side - 40°C, or higher. By regulating the heating temperature to such a temperature range, the complex degradate is obtained more efficiently and surely. Although the heating temperature for obtaining the solid electrolyte cannot be unequivocally prescribed because it varies with the structure of the resultant complex degradate, in general, it is preferably 135°C or lower, more preferably 130°C or lower, and still more preferably 125°C or lower. Although a lower limit of the heating temperature is not particularly limited, it is preferably 90°C or higher, more preferably 100°C or higher, still more preferably 110°C or higher.

In the case of obtaining the crystalline sulfide solid electrolyte by heating the amorphous smoothed complex degradate or the modified complex degradate, the heating temperature may be determined according to the structure of the crystalline sulfide solid electrolyte, and it is preferably higher than the above heating temperature for obtaining the amorphous complex degradate. Specifically, the heating temperature may be determined by subjecting the smoothed complex degradate or the modified complex degradate to differential thermal analysis (DTA) with a differential thermal analysis device (DTA device) under a temperature rise condition of 10°C/min and adjusting the temperature to a range of preferably 5°C or higher, more preferably 10°C or higher, and still more preferably 20°C or higher starting from a peak top temperature of the exothermic peak detected on the lowermost temperature side. Although an upper limit thereof is not particularly restricted, it may be set to a temperature of about 40°C or lower. By regulating the heating temperature to such a temperature range, the crystalline sulfide solid electrolyte is obtained more efficiently and surely. Although the heating temperature for obtaining the crystalline sulfide solid electrolyte cannot be unequivocally prescribed because it varies with the structure of the resultant crystalline sulfide solid electrolyte, in general, it is preferably 130°C or higher, more preferably 135°C or higher, and still more preferably 140°C or higher. Although an upper limit of the heating temperature is not particularly limited, it is preferably 300°C or lower, more preferably 280°C or lower, and still more preferably 250°C or lower.

Although the heating time is not particularly limited so long as it is a time for which the desired complex degradate or crystalline sulfide solid electrolyte is obtained, for example, it is preferably 1 minute or more, more preferably 10 minutes or more, still more preferably 30 minutes or more, and yet still more preferably 1 hour or more. In addition, though an upper limit of the heating time is not particularly restricted, it is preferably 24 hours or less, more preferably 10 hours or less, still more preferably 5 hours or less, and yet still more preferably 3 hours or less.

It is preferred that the heating is performed in an inert gas atmosphere (for example, a nitrogen atmosphere and an argon atmosphere) or in a reduced pressure atmosphere (especially, in vacuo). This is because deterioration (for example, oxidation) of the complex degradate and the crystalline sulfide solid electrolyte can be prevented from occurring. Although a method for heating is not particularly limited, for example, a method of using a hot plate, a vacuum heating device, an argon gas atmosphere furnace, or a firing furnace can be adopted. In addition, industrially, a lateral dryer or a lateral vibration fluid dryer provided with a heating means and a feed mechanism, or the like may be selected according to the heating treatment amount.

(Complex Degradate)

The complex degradate obtained in the present embodiment contains a lithium atom, a sulfur atom, a phosphorus atom, and a halogen atom as needed. As representative examples thereof, there are preferably exemplified solid electrolytes constituted of lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and solid electrolytes further containing other atom, such as an oxygen atom and a silicon atom, for example, $Li_2S$-$P_2S_5$-$Li_2O$-LiI and $Li_2S$-$SiS_2$-$P_2S_5$-LiI. From the viewpoint of obtaining a higher ionic conductivity, solid electrolytes constituted of lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, are preferred.

The kinds of the atoms constituting the complex degradate can be confirmed by, for example, an inductivity coupled plasma optical emission spectrometer (ICP).

In the case where the complex degradate obtained in the present embodiment is one having at least $Li_2S$-$P_2S_5$, from the viewpoint of obtaining a higher ionic conductivity, a molar ratio of $Li_2S$ to $P_2S_5$ is preferably 65 to 85:15 to 35, more preferably 70 to 80:20 to 30, and still more preferably 72 to 78:22 to 28.

In the case where the complex degradate obtained in the present embodiment is, for example, $Li_2S$-$P_2S_5$-LiI-LiBr, the total content of lithium sulfide and diphosphorus pentasulfide is preferably 60 to 95 mol%, more preferably 65 to 90 mol%, and still more preferably 70 to 85 mol%. In addition, a proportion of lithium bromide relative to the total of lithium bromide and lithium iodide is preferably 1 to 99 mol%, more preferably 20 to 90 mol%, still more preferably 40 to 80 mol%, and especially preferably 50 to 70 mol%.

In the complex degradate obtained in the present embodiment, a blending ratio (molar ratio) of lithium atom, sulfur atom, phosphorous atom and halogen atom is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, and still more preferably 1.2 to 1.6:1.3 to 1.7:0.25 to 0.5:0.08 to 0.4. In addition, in the case of using a combination of bromine and iodine as a halogen atom, a blending ratio (molar ratio) of lithium atom, sulfur atom, phosphorus atom, bromine and iodine is preferably 1.0 to 1.8:1.0 to 2.0:0.1 to 0.8:0.01 to 3.0:0.01 to 0.3, more preferably 1.1 to 1.7:1.2 to 1.8:0.2 to 0.6:0.02 to 0.25:0.02 to 0.25, still more preferably 1.2 to 1.6:1.3 to 1.7:0.25 to 0.5:0.03 to 0.2:0.03 to 0.2, and yet still more preferably 1.35 to 1.45:1.4 to 1.7:0.3 to 0.45:0.04 to 0.18:0.04 to 0.18. By allowing the blending ratio (molar ratio) of lithium atom to sulfur atom to phosphorus atom to halogen atom to fall within the above range, it becomes easy to obtain a solid electrolyte having a thio-LISICON Region II-type crystal structure which will be described later and having a higher ionic conductivity.

In this description, the average particle diameter ($D_{50}$) is a value measured according to a laser diffraction particle size distribution measuring method, and for example, it can be measured according to the method described in Examples.

Although the shape of the complex degradate is not particularly limited, examples thereof include a granular shape. The average particle diameter ($D_{50}b$) of the granular complex degradate is, for example, within a range of 0.01 $\mu$m to 500 $\mu$m, and further 0.1 to 200 $\mu$m.

In the present description, the specific surface is a value measured according to a BET method, and for example, it can be measured according to the method described in Examples.

The specific surface area (Sb) of the complex degradate before smoothing treatment or before mechanical treatment is preferably 21 $m^2/g$ or more, more preferably 23 $m^2/g$ or more, even more preferably 25 $m^2/g$ or more, further more preferably 27 $m^2/g$ or more, and the upper limit is preferably 70 $m^2/g$ or less, more preferably 60 $m^2/g$ or less, even more preferably 50 $m^2/g$ or less, further more preferably 35 $m^2/g$ or less.

<Obtaining Smoothed Complex Degradate or Modified Complex Degradate>

The present embodiment needs to obtain a smoothed complex degradate by performing smoothing treatment on the above-mentioned complex degradate, or to obtain a modified complex degrade by mechanical treatment thereof. As described above, one preferred mode of mechanical treatment is smoothing treatment.

By smoothing treatment or mechanical treatment, the surface area of the complex degradate reduces, and by subsequent heating as mentioned above to give a crystalline sulfide solid electrolyte, a pulverized solid electrolyte having a high ionic conductivity can be obtained, therefore smoothing treatment or mechanical treatment is preferred.

(Mechanical Treatment)

Mechanical treatment is treatment for making the above-mentioned complex degradate into a modified complex degradate.

"Mechanical treatment" is a treatment for pulverizing the solid electrolyte, and of "mechanical treatment, treatment especially for reducing the specific surface area along with pulverization is "smoothing treatment".

The method for mechanical treatment for the complex degradate is not specifically limited so far as it includes disintegrating treatment, for which there is mentioned a method using an apparatus such as a grinding machine or a stirring machine.

The stirring machine includes those exemplified hereinabove as an apparatus for use in the production method for the complex degradate mentioned above, and one example thereof is a mechanical stirring mixer equipped with a stirring blade inside the tank. The mechanical stirring mixer includes a high-speed stirring mixer and a double-arm type mixer. Any of these types can be employed here, but from the viewpoint of more readily controlling a desired average particle size, a high-speed stirring mixer is preferred. More specifically, as mentioned above, the high-speed stirring mixer includes a vertical axis rotating mixer and a lateral axis rotating mixer, and in addition to these, also includes other various devices such as a high-speed revolving thin-film stirrer and a high-speed shearing stirrer. Above all, from the viewpoint of the ability to more readily pulverize into a desired average particle size, a high-speed revolving thin-film stirrer (also referred to as "thin-film revolving high-speed mixer") is preferred.

As the grinding machine employable in the sulfide solid electrolyte treatment method of the present embodiment, there is mentioned a grinding machine equipped with a rotor capable of stirring the sulfide solid electrolyte, that is, the complex degradate at least having a volume-based average particle size, as measured according to a laser diffraction particle size distribution measuring method, of 3 $\mu$m or more and having a specific surface area, as measured according to a BET method, of 20 $m^2/g$ or more.

In the sulfide solid electrolyte treatment method of the present embodiment, by controlling the peripheral speed of the rotor of the grinding machine, disintegrating (palverizing) and granulation (particle growth) of the complex degradate can be controlled. Specifically, in the method, the average particle size can be reduced by disintegration, or the average particle size can be enlarged by granulation, and therefore in this, the average particle size of the sulfide solid electrolyte can be readily controlled in any desired manner. More specifically, by rotating the rotor at a low peripheral speed, disintegration can be attained, and by rotating the rotor at a high peripheral speed, granulation can be attained. In that manner, merely by controlling the peripheral speed of the rotor, the average particle size of the sulfide solid electrolyte can be controlled easily.

Regarding the peripheral speed of the rotor, low peripheral speed and high peripheral speed can vary, for example, depending on the particle size, the material and the amount used of the media for use in the grinding machine, and therefore cannot be indiscriminately defined. For example, in the case of a device not using a grinding medium such as balls or beads like a high-speed revolving thin-film stirrer, disintegration can mainly occur even at a relatively high peripheral speed, and granulation can occur hardly. On the other hand, in the case of an apparatus using a grinding medium such as balls or beads, disintegration can be attained at a low peripheral speed as described above, and construction is possible at a high peripheral speed. Accordingly, under the same condition for the grinding apparatus and the grinding medium, the peripheral speed that enables disintegration is smaller than the peripheral speed that enables granulation. Consequently, for example, under the condition under which granulation is possible at a borderline peripheral speed of 6 m/sec, low peripheral speed means less than 6 m/sec, and high peripheral speed means 6 m/sec or more.

As a more specific device of a grinding machine, for example, there can be mentioned a medium-assisted grinding machine. The medium-assisted grinding machine can be grouped into a vessel driving grinding machine and a medium-stirring grinding machine.

The vessel driving grinding machine includes a stirring tank, a grinding tank, or a combination thereof such as a ball mill and bead mill. As a ball mill and a bead mill, any type is employable including a rotation type, a tumbler type, a vibration type and a planetary type.

The medium-stirring grinding machine includes various grinding machines, such as an impact grinder such as a cutter mill, a hammer mill and a pin mill; a tower grinder such as a tower mill; a stirrer tank grinder such as an attritor, an Aquamizer, and a sand grinder; a flow tank grinder such as a Viscomill, and a pearl mill; a flow tube grinder; an annular grinder such as a co-ball mill; and a continuous dynamic grinder.

In the sulfide solid electrolyte treatment method of the present embodiment, form the viewpoint of more readily controlling the desired average particle size, a vessel driving grinding machine is preferred. Above all, a bead mill and a ball mill are preferred. The vessel driving grinding machine such as a bead mill and a ball mill is equipped with a vessel such as a stirring tank and a grinding tank for containing the complex degradate, as a rotor capable of stirring the complex degradate. Accordingly, as mentioned above, by controlling the peripheral speed of the rotor, the average particle size of the sulfide solid electrolyte can be readily controlled.

The bead mill and the ball mill can make it possible to control an average particle size by controlling the grain size, the material and the amount to be used of the beads and the balls to be used, and therefore these enable adjustment of a finer average particle size, and also enable adjustment of an average particle size heretofore unknown. For example, as a bead mill, herein employable is a centrifuge-type mill in which ultrafine beads ($\varphi$ 0.015 to 1 mm or so) of so-called microbeads can also be used (for example, Ultra Apex Mill, UAM).

Regarding average particle size control, the average particle size can be reduced more (disintegration) by more reducing the energy to be given to the complex degradate, that is, by lowering the peripheral speed of the rotor, or by reducing the particle size of the beads balls or the like, and as a result, the specific surface area tends to increase, while on the other hand, by increasing the energy, that is, by increasing the peripheral speed of the rotor, or by increasing the particle size of the beads balls or the like, the average particle size can increase (granulation) and, as a result, the specific surface area tends to reduce.

In addition, for example, by prolonging the time for mechanical treatment, the average particle size tends to increase (granulation).

The grain size of the medium to be used in the bead mill or the ball mill or the like can be appropriately determined in consideration of the desired average particle size and also the kind, the scale and the like of the apparatus to be used, but in general, it is preferably 0.01 mm or more, more preferably 0.015 mm or more, even more preferably 0.02 mm or more, further more preferably 0.04 mm or more, and the upper limit is preferably 3 mm or less, more preferably 2 mm or less, even more preferably 1 mm or less, further more preferably 0.8 mm or less.

Examples of the material of the medium include metals such as stainless, chrome steel, and tungsten carbide; ceramics such as zirconia and silicon nitride; and minerals such as agate.

The treatment time for mechanical treatment can be appropriately determined in consideration of the desired average particle size and also the kind, the scale and the like of the apparatus to be used, but in general, it is preferably 5 seconds or more, more preferably 30 seconds or more, even more preferably 3 minutes or more, further more preferably 15 minutes or more, and the upper limit is preferably 5 hours or less, more preferably 3 hours or less, even more preferably 2 hours or less, further more preferably 1.5 hours or less.

The peripheral speed of the rotor in mechanical treatment (rotation speed in the apparatus such as bead mill and ball mill) can be appropriately determined in consideration of the desired average particle size and also the kind, the scale and the like of the apparatus to be used, but in general, it is preferably 0.5 m/sec or more, more preferably 1 m/sec or more, even more preferably 2 m/sec or more, further more preferably 3 m/sec or more, and the upper limit is preferably 55 m/sec or less, more preferably 40 m/sec or less, even more preferably 25 m/sec or less, further more preferably 15 m/sec or less. The peripheral speed can be the same during the process but can change on the way.

Mechanical treatment can be performed with a solvent. The solvent can be appropriately selected from those exemplified hereinabove as a solvent usable in the embodiments C and D of the complex degradate production method, and from the viewpoint of attaining the desired average particle size and specific surface area and attaining a high ionic conductivity stably, preferred are an aliphatic hydrocarbon solvent, an alicyclic hydrocarbon solvent, an aromatic hydrocarbon solvent and an ether solvent. More preferred are heptane, cyclohexane, toluene, ethylbenzene, diethyl ether, diisopropyl ether, dibutyl ether, dimethoxyethane, cyclopentyl methyl ether, tert-butyl methyl ether, and anisole, even more preferred are heptane, toluene and ethylbenzene, and further more preferred are heptane and toluene. In the present embodiment, pulverization can be readily attained by disintegrating, even though a dispersant is not used. However, from the viewpoint of more enhancing dispersion and more efficiently attaining pulverization, a dispersant can be used. Among the above-mentioned solvents, for example, an ether solvent can function as a dispersant.

The amount to be used of the solvent is preferably such that the content of the complex degradate relative to the total amount of the complex degradate and the solvent is 1% by mass or more, more preferably 3% by mass or more, even more preferably 5% by mass or more, and the upper limit is preferably 30% by mass or less, more preferably 20% by mass or less, even more preferably 15% by mass or less.

In the case where mechanical treatment is carried out with a solvent, it can include the above-mentioned drying of the modified complex degradate.

(Modified Complex Degradate)

The modified complex degradate has the same chemical characteristics as the above-mentioned complex degradate, but differs from the complex degradate in the average particle size.

The shape of the modified complex degradate after mechanical treatment is not specifically limited, and an example thereof is a granular shape. Preferably, the average particle size ($D_{50}c$) of the granular modified complex degradate is not increased by granulation by mechanical treatment, and can be, for example, within a range of 0.01 $\mu$m to 500 $\mu$m, and can be further within a range of 0.1 to 200 $\mu$m.

In the present embodiment, the ratio of the average particle size ($D_{50}d$) of the complex degradate before mechanical treatment to the average particle size ($D_{50}c$) of the modified complex degradate ($D_{50}d/D_{50}c$) is, from the viewpoint of increasing the ionic conductivity of the crystalline sulfide solid electrolyte, preferably 1.0 or more and 100.0 or less, more preferably 2.0 or more and 80.0 or less, even more preferably 2.5 or more and 70.0 or less.

(Smoothing Treatment)

Smoothing treatment is a treatment for smoothing the complex degradate to be a smoothed complex degradate.

The smoothing treatment in the present embodiment is preferably performed using a grinding machine.

In conventional pulverization treatment, in general, the specific surface area increases after pulverization and the ionic conductivity lowers. On the other hand, in the present embodiment, a raw material inclusion containing at least one selected from a lithium atom, a sulfur atom and a phosphorus atom, and a complexing agent are mixed without using a mechanical treating machine to obtain an electrolyte precursor, and the electrolyte precursor is heated to obtain a complex degradate and thereafter smoothed by "smoothing treatment", and accordingly, both pulverization and specific surface area reduction are attained and the ionic conductivity can be increased.

Smoothing treatment is one mode of mechanical treatment, and means a treatment at least including grinding, and this is treatment that can make Sb/Sa to be mentioned below fall 1.0 or more and 10.0 or less and ($D_{50}b/D_{50}a$) fall 1.0 or more and 100.0 or less.

Smoothing treatment can be carried out optionally using the above-mentioned solvent, which is preferred from the viewpoint that smoothing is attained efficiently and the resultant crystalline sulfide solid electrolyte can have a high ionic conductivity.

A smoothing method with a grinding machine is a method heretofore employed as a mechanical milling method. As the grinding machine, for example, a medium-assisted grinding machine using a grinding medium can be employed.

The medium-assisted grinding machine can be grouped into a vessel driving grinding machine and a medium-stirring grinding machine. The vessel driving grinding machine includes a stirring tank, a grinding tank, or a combination thereof such as a ball mill and bead mill. The medium-stirring grinding machine includes various grinding machines, such as an impact grinder such as a cutter mill, a hammer mill and a pin mill; a tower grinder such as a tower mill; a stirrer tank grinder such as an attritor, an Aquamizer, and a sand grinder; a flow tank grinder such as a Viscomill, and a pearl mill; a flow tube grinder; an annular grinder such as a co-ball mile; a continuous dynamic grinder; and a single-screw or multi-screw kneader. Above all, in consideration of easiness of particle size control of the resultant sulfide, preferred are a ball mill and a bead mill exemplified as a vessel driving grinding machine.

These grinding machine can be appropriately selected in accordance with the desired scale, and in a relatively small scale, usable is a vessel driving grinding machine such as a ball mill and a bead mill. On the other hand, in a large scale or for mass production, any other type of grind machine can be used.

Also as described below, in the case where smoothing treatment is carried out in a liquid state or a slurry state with a liquid such as a solvent, preferred is a wet-type grind machine applicable to wet-type grinding.

Typically, the wet-type grinding machine includes a wet-type bead mill, a wet-type ball mill, and a wet-type vibrating mill. From the viewpoint that the condition for grinding operation can be freely controlled to be applicable to particles having a smaller particle size, preferred is a wet-type bead mill using beads as grinding media. Also dry-type grind machines are usable, including a dry-type medium-assisted grinding machine such as a dry-type bead mill, a dry-type ball mill, a dry-type planetary ball mill or a dry-type vibrating mill, as well as a dry-type mediumless grinding machine such as a jet mill.

Also when the subject to be mixed is in a liquid state or in a slurry state, a flow grinding machine which allows circulation operation of optionally circulating the subject can be employed. Specifically, there can be mentioned a grinding machine of a mode where a slurry is circulated between a grinding machine for grinding it (grinding and mixing machine) and a temperature retention bath (reactor).

The size of the beads and the balls for use in the above-mentioned ball mill and bead mill can be appropriately selected depending on the desired particle size the processing amount and the like, and for example, the diameter of the beads can be generally 0.05 mmφ or more, preferably 0.1 mmφ or more, even more preferably 0.2 mmφ or more, and the upper limit is generally 5.0 mmφ or less, preferably 3.0 mmφ or less, more preferably 2.0 mmφ or less. The diameter of the balls is generally 2.0 mmφ or more, preferably 2.5 mmφ or more, more preferably 3.0 mmφ or more, and the upper limit is generally 30.0 mmφ or less, preferably 20.0 mmφ or less, more preferably 15.0 mmφ or less.

The amount to be used of the beads or the balls cannot be indiscriminately said as varying depending on the processing scale, and is generally 100 g or more, preferably 200 g or more, more preferably 300 g or more, and the upper limit is 5.0 kg or less, more preferably 3.0 kg or less, even more preferably 1.0 kg or less.

Examples of the material include metals such as stainless, chrome steel, and tungsten carbide; ceramics such as zirconia, and silicon nitride; and minerals such as agate.

Regarding the peripheral speed of the rotor, low peripheral speed or high peripheral speed cannot be indiscriminately determined as varying, for example, depending on the particle size, the material, the amount used and the like of the medium for use in the grinding machine. For example, in the case of an apparatus not using a grinding medium such as balls or beads like a high-speed revolting thin-film stirring machine, disintegration can mainly occur even at a relatively high peripheral speed, and granulation can occur hardly. On the other hand, in the case of an apparatus using a grinding medium such as balls or beads, disintegration can be attained even at a low peripheral speed as described above, and construction is possible at a high peripheral speed. Accordingly, under the same condition for the grinding apparatus and the grinding medium, the peripheral speed that enables disintegration is smaller than the peripheral speed that enables granulation. Consequently, for example, under the condition under which granulation is possible at a borderline peripheral speed of 6 m/sec, low peripheral speed means less than 6 m/sec, and high peripheral speed means 6 m/sec or more.

Regarding the peripheral speed, by smoothing treatment of smoothing the complex degradate at a high peripheral speed to give a smoothed complex degradate, the specific surface area of the solid electrolyte can be lowered and the ionic conductivity can be increased, and therefore the mode at a high peripheral speed is preferred. Subsequently, the smoothed complex degradate is further ground to control the particle size of the smoothed complex degradate, and the mode is also preferred.

The smoothing treatment time cannot be indiscriminately determined as varying depending on the processing scale, and is generally 10 minutes or more, preferably 20 minutes or more, more preferably 30 minutes or more, further more preferably 45 minutes or more, and the upper limit is generally 72 hours or less, preferably 65 hours or less, more preferably 52 hours or less. Falling within the range, granulation can be suppressed and smoothing is promoted, and the mode is therefore preferred.

Mixing, stirring, grinding and a combined treatment thereof can be carried out by selecting the size and the material of the medium to be used (beads, balls), as well as the rotation number of the rotor, the time and the like, and the particle size of the resultant sulfide can be thereby controlled.

In the smoothing treatment, the above-mentioned solvent can be added to the complex degradate for mixing.

In the case of smoothing treatment with a solvent, the treatment can include drying as above of the smoothed complex degradate.

(Smoothed Complex Degradate)

The smoothed complex degradate has the same chemical characteristics as those of the above-mentioned complex degradate, but differs from the complex degradate in the specific surface area.

The smoothed complex degradate after smoothing treatment has a smaller specific surface area than the complex degradate before smoothing treatment. As influenced by the specific surface area of the complex degradate for use for smoothing treatment, the specific surface area (Sa) of the smoothed complex degradate cannot be indiscriminately said, but the lower limit thereof is preferably 0.5 m$^2$/g or more, more preferably 1.0 m$^2$/g or more, even more preferably 2.0 m$^2$/g or more, and the upper limit is preferably 30 m$^2$/g or less, more preferably 20 m$^2$/g or less, even more preferably 15 m$^2$/g or less, further more preferably 12 m$^2$/g or less.

In the present embodiment, the ratio of the specific surface area (Sb) of the complex degradate before smoothing treatment to the specific surface area (Sa) of the smoothed complex degradate (Sb/Sa) is, from the viewpoint of increasing the ionic conductivity of the crystalline sulfide solid electrolyte, preferably 1.0 or more and 10.0 or less, more preferably 2.0 or more and 8.0 or less, even more preferably 3.0 or more and 7.0 or less.

Although the shape of the smoothed complex degradate is not particularly limited, examples thereof include a granular shape. The average particle diameter ($D_{50}a$) of the granular smoothed complex degradate is preferably free from granulation by smoothing treatment and is, for example, within a range of 0.01 $\mu$m to 500 $\mu$m, further within a range of 0.1 to 200 $\mu$m.

In the present embodiment, the ratio of the average particle size ($D_{50}b$) of the smoothed complex degradate to the average particle size ($D_{50}b$) of the complex degradate before smoothing treatment ($D_{50}b/D_{50}a$) is, from the viewpoint of increasing the ionic conductivity of the crystalline sulfide solid electrolyte, preferably 1.0 or more and 100.0 or less, more preferably 2.0 or more and 80.0 or less, even more preferably 2.5 or more and 70.0 or less.

<Heating of Modified Complex Degradate or Smoothed Complex Degradate>

In the present embodiment, the modified complex degradate or the smoothed complex degradate needs to be heated.

By heating, the degradate is crystallized to obtain a solid electrolyte having a high ionic conductivity, therefore heating is preferred.

(Crystalline Sulfide Solid Electrolyte)

The crystalline sulfide solid electrolyte obtained in the present embodiment may be a so-called glass ceramics which is obtained by heating the modified complex degradate or the smoothed complex degradate to a crystallization temperature or higher. Examples of a crystal structure thereof include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around $2\theta$ = 20.2° and 23.6° (see, for example, JP 2013-16423 A).

In addition, examples thereof include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725). Among those mentioned above, a crystal structure of the crystalline sulfide solid electrolyte obtained by the present production method is preferably a thio-LISICON Region II-type crystal structure from the standpoint that a higher ionic conductivity is obtained. Here, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure. In addition, though the crystalline solid electrolyte obtained by the present production method may be one having the above thio-LISICON Region II-type crystal structure or may be one having the thio-LISICON Region II-type crystal structure as a main crystal, it is preferably one having the thio-LISICON Region II-type crystal structure as a main crystal from the viewpoint of obtaining a higher ionic conductivity. In this description, the wording "having as a main crystal" means that a proportion of the crystal structure serving as an object in the crystal structure is 80% or more, and it is preferably 90% or more, and more preferably 95% or more. In addition, from the viewpoint of obtaining a higher ionic conductivity, the crystalline solid electrolyte obtained by the present production method is preferably one not containing crystalline $Li_3PS_4$ ($\beta$-$Li_3PS_4$).

In the X-ray diffractometry using a CuKo ray, the $Li_3PS_4$ crystal structure gives diffraction peaks, for example, at around $2\theta$ = 17.5°, 18.3°, 26.1°, 27.3°, and 30.0°; the $Li_4P_2S_6$ crystal structure gives diffraction peaks, for example, at around $2\theta$ = 16.9°, 27.1°, and 32.5°; the $Li_7PS_6$ crystal structure gives diffraction peaks, for example, at around $2\theta$ = 15.3°, 25.2°, 29.6°, and 31.0°; the $Li_7P_3S_{11}$ crystal structure gives diffraction peaks, for example, at around $2\theta$ = 17.8°, 18.5°, 19.7°, 21,8°, 23.7°, 25.9°, 29.6°, and 30.0°; the $Li_{4-x}Ge_{1-x}P_xS_4$-based thio-LISICON Region II-type crystal structure gives diffraction peaks, for example, at around $2\theta$ = 20.1°, 23.9°, and 29.5°; and the crystal structure similar to the $Li_{4-x}Ge_{1-x}P_xS_4$-based thio-LISICON Region II-type crystal structure gives diffraction peaks, for example, at around $2\theta$ = 20.2 and 23.6°. The position of these peaks may vary within a range of $\pm$0.5°.

As mentioned above, in the case when the thio-LISICON Region II-type crystal structure is obtained in the present embodiment, preferably, this does not contain a crystalline $Li_3PS_4$ ($\beta$-$Li_3PS_4$). Fig. 5 shows an X-ray diffractometry of a crystalline sulfide solid electrolyte (1) 102 obtained in the present production method. The sulfide solid electrolyte in the present embodiment does not have diffraction peaks at $2\theta$ = 17.5°, 26.1° as seen in crystalline $Li_3PS_4$, or even when having them, the detected peaks are merely extremely small as compared with the diffraction peaks of the thio-LISICON Region II-type crystal structure.

The crystal structure having the above-mentioned $Li_7PS_6$ crystal structure in which a part of P is substituted with Si to have a compositional formula $Li_{7-x}P_{1-y}Si_yS_6$ or $Li_{7+x}P_{1-y}Si_yS_6$ (x represents -0.6 to 0.6, y represents 0.1 to 0.6) is a cubic crystal or a rhombic crystal, preferably a cubic crystal having peaks mainly appearing at the position of

$2\theta$ = 15.5°, 18.0°, 25.0°, 30.0°, 31.4°, 45.3°, 47.0°, and 52.0° in X-ray diffractometry using a CuKa ray. The crystal structure shown by the above-mentioned compositional formula $Li_{7-x-2y}PS_{6-x-y}Cl_x$ (0.8≤x≤1.7, 0<y≤-0.25x+0.5) is preferably a cubic crystal having peaks mainly appearing at the position of $2\theta$ = 15.5°, 18.0°, 25.0°, 30.0°, 31.4°, 45.3°, 47.0°, and 52.0° in X-ray diffractometry using a CuKo ray. The crystal structure shown by the above-mentioned compositional formula $Li_{7-x}PS_{6-x}Ha_x$ (Ha represents Cl or Br, x is preferably 0.2 to 1.8) is preferably a cubic crystal having peaks mainly appearing at the position of $2\theta$ = 15.5°, 18.0°, 25.0°, 30.0°, 31.4°, 45.3°, 47.0°, and 52.0° in X-ray diffractometry using a CuK$\alpha$ ray.

The position of these peaks may vary within a range of ±0.5°.

The crystalline sulfide solid electrolyte obtained by the present production method is preferably such that the full-width at half-maximum of the maximum peak including the background at $2\theta$ = 10 to 40° in X-ray diffractometry using a CuK$\alpha$ ray is preferably $\Delta 2\theta$ = 0.32 or less. Having such properties, the solid electrolyte attains a higher ionic conductivity and enhances cell performance. From the same viewpoint, the full-width at half-maximum of the maximum peak is more preferably $\Delta 2\theta$ = 0.30 or less, even more preferably $\Delta 2\theta$ = 0.28 or less.

Examples of the crystalline sulfide solid electrolyte having such properties include typically one having a thio-LISICON Region II-type crystal structure.

For example, Fig. 5 shows an example of X-ray diffractometry of the crystalline sulfide solid electrolyte having a thio-LISICON Region II-type crystal structure obtained in Example 1, in which it is known that the maximum peak including the background at $2\theta$ = 10 to 40° is a peak at 20.1°, and the peak is a sharp peak having a full-width at half-maximum of $\Delta 2\theta$ = 0.25. In that manner, the crystalline sulfide solid electrolyte has a sharp peak as the maximum peak having a full-width at half-maximum of 0.32 or less and therefore can express an extremely high ionic conductivity to enhance cell performance. Such a full-width at half-maximum indicates good crystallinity. Accordingly, the solid electrolyte can be disintegrated at a smaller energy and hardly causes ionic conductivity reduction owing to vitrification (amorphization). In addition, the modified complex degradate or the smoothed complex complex degradate in the present embodiment has a porous structure having a relatively large specific surface area and has good crystallinity, and therefore, even when it is partially or wholly vitrified by disintegration or granulation, the average particle size and the specific surface area thereof can be relatively suppressed from varying in recrystallization, and accordingly, the average particle size can be readily controlled by mechanical treatment or smoothing treatment.

Full-width at half-maximum can be calculated as follows.

A range at a maximum peak $\pm$ 2° is used. A proportion of Lorentzian function is represented by A ($0 \leq A \leq 1$), a peak intensity correction value is represented by B, a $2\theta$ maximum peak is represented by C, a peak position in the range for calculation (C $\pm$ 2°) is represented by D, a full-width at half-maximum is represented by E, a background is represented by F, each peak intensity in a peak range for use for calculation is represented by G. With A, B, C, D, E and F being variables, the following is calculated for every peak position.

$$H=G\cdot\{B\times\{A/(1+(D\cdot C)^2/E^2)+(1\cdot A)\times exp(\cdot 1\times(D\cdot C)^2/E^2)\}+F\}$$

H is totalized within the range of the above peak C $\pm$ 2° in calculation, and the total value is minimized in GRG non-linearity using a solver function of spreadsheet software Excel (Microsoft) to give a full-width at half-maximum.

Although the shape of the crystalline sulfide solid electrolyte is not particularly restricted, examples thereof include a granular shape. The average particle diameter ($D_{50}$) of the granular crystalline sulfide solid electrolyte is, for example, within a range of 0.01 $\mu$m to 500 $\mu$m, and 0.1 to 200 $\mu$m.

The volume-based average particle size of the crystalline sulfide solid electrolyte obtained according to the present production method is the same as the average particle size of the sulfide solid electrolyte of the present embodiment mentioned above, and is 3 $\mu$m or more.

The specific surface area, as measured according to a BET method, of the crystalline sulfide solid electrolyte obtained according to the present production method is the same as the specific surface area of the sulfide solid electrolyte of the present embodiment mentioned above, and is 20 $m^2/g$ or more.

(Use of Crystalline Sulfide Solid Electrolyte)

The crystalline sulfide solid electrolyte of the present embodiment has a predetermined average particle size and a predetermined specific surface area as well as a high ionic conductivity, and has excellent cell performance, and in addition, it hardly generates hydrogen sulfide. Consequently, it is suitably used for batteries.

In the case of adopting a lithium element as the conduction species, such is especially suitable. The crystalline sulfide solid electrolyte of the present embodiment may be used for a positive electrode layer, may be used for a negative electrode layer, or may be used for an electrolyte layer. Each of the layers can be produced by a known method.

The above battery preferably uses a collector in addition to the positive electrode layer, the electrolyte layer, and the negative electrode layer, and the collector can be any known one. For example, a layer formed by coating Au, Pt, Al, Ti, Cu, or the like capable of reacting with the above crystalline sulfide solid electrolyte, with Au or the like can be used.

Examples

Next, the present invention is described specifically with reference to Examples, but it should be construed that the present invention is by no means restricted by these Examples.

(1) Measurement methods are described.

(1-1) Volume-based Average Particle Diameter ($D_{50}$)

This is measured with a laser diffraction/scattering particle size distribution measuring apparatus ("Partica LA-950 (Model Number)", by HORIBA, Ltd.).
A mixture prepared by mixing dewatered toluene (by FUJIFILM Wako Pure Chemical Corporation, special grade chemical) and tertiary butyl alcohol (by FUJIFILM Wako Pure Chemical Corporation, special grade chemical) in a ratio by weight 93.8/6.2 was used as a dispersion medium. 50 mL of the dispersion medium was injected into a flow cell of the apparatus and circulated therein, and then a subject to be measured was added and ultrasonically processed, and thereafter the particle size distribution thereof was measured. The amount of the subject to be measured was so controlled that, on the screen for measurement as defined by the apparatus, the red light transmittance (R) corresponding to the particle concentration could fall 80 to 90% and the blue light transmittance (B) could fall 70 to 90%. Regarding the arithmetic condition, the refractive index of the subject to be measured to be 2.16, and the refractive index of the dispersion medium to be 1.49 were respectively used. In setting the distribution morphology, the number of repetition was fixed at 15 times in particle size calculation.

(1-2) Measurement of Specific Surface Area

A value measured in a BET flow method (three-point method) using a nitrogen gas as the adsorbate, according to JIS R 1626:1996, was referred to as a specific surface area.

(1-3) Measurement of Ionic Conductivity

In the present Examples, the ionic conductivity was measured as follows.
A sulfide solid electrolyte was molded into disc pellets having a diameter of 10 mm (cross section S: 0.785 $cm^2$) and a height (L) of 0.1 to 0.3 cm to be samples. An electrode terminal was taken from the top and the bottom of the sample, and in measurement according to an AC impedance method at 25°C (frequency range: 1 MHz to 100 Hz, amplitude: 10 mV), Cole-Cole plots were drawn. At around the right edge of the arc observed in the high-frequency region, the real part Z' ($\Omega$) at the point at which -Z'' (S2) was the smallest was referred to as a bulk resistance R ($\Omega$) of the electrolyte, and according to the following mathematical formulae, the ionic conductivity $\sigma$ (S/cm) was calculated.

$$R = \rho(L/S)$$

$$\sigma = 1/\rho$$

(1-4) X-ray Diffractometry (XRD)

In X-ray diffractometry, the resultant crystalline product was measured.
A powder of the precursor or the solid electrolyte produced in each Example was filled in a groove having a diameter of 20 mm and a depth of 0.2 mm, and leveled with glass to give a sample. The sample was sealed up with a Kapton film for XRD and used for measurement while kept out of contact with air.
Using a powdery X-ray diffractometry apparatus D2 PHASER by Bruker Corporation, the measurement was carried out under the following conditions.
    Tube voltage: 30 kV

Tube current: 10 mA

X-ray wavelength: Cu-Ka ray (1.5418 Å)

Optical system: focusing method

Slit structure: solar slit 4° (both on light incident side and light reception side), divergence slit 1 mm, Kβ filter (Ni plate 0.5%), (using air scatter screen 3 mm)

Detector: semiconductor detector

Measurement range: 2θ = 10- to 60 degrees

Step width, scan speed: 0.05 deg, 0.05 deg/sec

(Example 1)

In a nitrogen atmosphere, 15.87 g of lithium sulfide ($Li_2S$) was introduced into a Schlenk flask with a stirrer. After the stirrer was rotated, 300 mL of cyclohexane was added, and then 6.26 g of iodine ($I_2$) was added, and stirred at room temperature for 2 hours. Subsequently, 3.94 g of bromine ($Br_2$) was added, then stirred at room temperature for 12 hours, and further stirred at 50°C for 3 hours. The slurry was statically left to precipitate a solid, then 190 mL of the supernatant was removed, and 190 ml of cyclohexane was added. The decantation was repeated three times to obtain a cyclohexane slurry containing lithium sulfide, lithium iodide and lithium bromide.

21.93 g of diphosphorus pentasulfide ($P_2S_5$) and 100 mL of cyclohexane were added to the cyclohexane slurry containing lithium sulfide, lithium iodide and lithium bromide, and transferred to a 500-mL separable flask equipped with a rotating blade-having circulation line (Fig. 2). 103 mL of tetramethylethylenediamine (TMEDA) was added thereto, and mixing was initiated by circulation stirring at room temperature (25°C) and at a rotation number of the rotating blade of 200 rpm and a pump flow rate of 550 mL/min. After 48 hours, 61 mL of 1,2-dimethoxyethane (DME) was added, then circulation stirring was continued for further 24 hours, and the resultant slurry was dried under reduced pressure to obtain a powdery electrolyte precursor (1). Next, by pressure reduction at 110°C for 2 hours, an amorphous complex degradate (1) was obtained. Next, by heating under reduced pressure at 180°C for 2 hours, a crystalline complex degradate (1) was obtained.

The crystalline complex degradate (1) had crystallization peaks at 2θ = 20.2° and 23.6° in the X-ray diffraction spectrum, which confirmed possession of a thio-LISICON Region II-type crystal structure.

35.0 g of the crystalline complex degradate (1) and 547 g of toluene were put into a 1-liter reactor equipped with a stirring blade. The stirring blade was rotated, and then using a circulation operable bead mill (trade name: Star Mill LMZ015, by Ashizawa Finetech Ltd.), this was processed for smoothing treatment, a mode of mechanical treatment, for 1 hour (bead material: zirconia, bead diameter: 0.3 mmφ, amount used of beads; 456 g, pump flow rate: 650 mL/min, peripheral speed: 12 m/sec, mill jacket temperature: 10°C). The resultant slurry was dried in vacuum (room temperature: 23°C) to obtain a white powder of a smoothed complex degradate (1). Next, this was heated at 180°C under reduced pressure for 2 hours to obtain a crystalline sulfide solid electrolyte (1). The ionic conductivity was measured, and was 4.7 mS/cm.

In X-ray diffraction spectra, the crystalline sulfide solid electrolyte (1) was confirmed to have a thio-LISICON Region II-type crystal structure.

(Example 2)

21.93 g of diphosphorus pentasulfide ($P_2S_5$) and 100 mL of cyclohexane were added to the cyclohexane slurry containing lithium sulfide, lithium iodide and lithium bromide, obtained in Example 1, and transferred into a 500-mL separable flask equipped with a stirring blade-having circulation line (Fig. 2). 103 mL of tetramethylethylenediamine (TMEDA) was added thereto, and mixing was initiated by circulation stirring at 40°C and at a rotation number of the rotating blade of 200 rpm and a pump flow rate of 550 mL/min. After 160 hours, the resultant slurry was dried under reduced pressure at room temperature to obtain a powdery electrolyte precursor (2). Next, by pressure reduction at 110°C for 2 hours, an amorphous complex degradate (2) was obtained. Next, by heating under reduced pressure at 180°C for 2 hours, a crystalline complex degradate (2) was obtained.

In X-ray diffraction spectra, the crystalline complex degradate (2) was confirmed to have a thio-LISICON Region II-type crystal structure.

35.0 g of the crystalline complex degradate (2) and 547 g of toluene were put into a 1-liter reactor equipped with a stirring blade. The stirring blade was rotated, and then using a circulation operable bead mill (trade name: Star Mill LMZ015, by Ashizawa Finetech Ltd.), this was processed for smoothing treatment, a mode of mechanical treatment, for 1 hour (bead material: zirconia, bead diameter: 0.3 mmφ, amount used of beads; 456 g, pump flow rate: 650 mL/min, peripheral speed: 12 m/sec, mill jacket temperature: 10°C). The resultant slurry was dried in vacuum (room temperature: 23°C) to obtain a white powder of a smoothed complex degradate (2). Next, this was heated at 180°C under reduced pressure for 2 hours to obtain a crystalline sulfide solid electrolyte (2). The ionic conductivity was measured, and was 4.7 mS/cm.

In X-ray diffraction spectra, the crystalline sulfide solid electrolyte (2) was confirmed to have a thio-LISICON Region II-type crystal structure.

(Comparative Examples 1, 2)

The crystalline complex degradate (1) produced in Example 1 before smoothing treatment is Comparative Example 1, and the crystalline complex degradate (2) produced in Example 1 before smoothing treatment is Comparative Example 2.

The specific surface area, the average particle diameter ($D_{50}$) and the ionic conductivity of each solid electrolyte are shown in Table 1.

Table 1

| | Specific Surface Area ($m^2$/g) | Average Particle Diameter ($D_{50}$) ($\mu$m) | Ionic Conductivity (mS/cm) |
|---|---|---|---|
| Example 1 | 8 | 2.9 | 4.7 |
| Comparative Example 1 | 33 | 9.2 | 3.6 |
| Example 2 | 7 | 4.1 | 4.6 |
| Comparative Example 2 | 37 | 19.4 | 3.3 |

From the results in Example 1, Sa = 8, and $D_{50}$a = 2.9; and from the results in Comparative Example 1, Sa = 33, and $D_{50}$a = 9.2. As calculated from these, Sb/Sa = 4.1, and $D_{50}$b/$D_{50}$a = 6.1, which confirmed achievement of smoothing with suppressing granulation.

It is known that, by smoothing treatment, the specific surface area was smaller in Example 1 than in Comparative Example 1, and the ionic conductivity significantly increased.

Similarly, also as in Example 2 and Comparative Example 2, the ionic conductivity significantly increased, which confirmed the effect of smoothing treatment, a mode of mechanical treatment.

Industrial Applicability

In accordance with the present embodiment, a crystalline sulfide solid electrolyte having a high ionic conductivity and excellent in cell performance can be produced. The crystalline sulfide solid electrolyte obtained by the production method of the present embodiment is suitably used for batteries, especially batteries to be used for information-related instruments and communication instruments such as personal computers, video cameras, and mobile phones.

Reference Signs List

1. Reactor
2. Discharging Mouth
3. Returning Mouth
4. Stirrer
5. Stirring Blade
11. Pump
12. Circulation Line
13. Valve
100. Electrolyte Precursor (1)
101. Amorphous Complex Degradate (1)
102. Crystalline Sulfide Solid Electrolyte (1)

**EP 4 246 537 A2**

**Claims**

1.  A method of producing a crystalline sulfide solid electrolyte comprising:

    mixing a raw material inclusion containing at least one selected from a lithium atom, a sulfur atom and a phosphorus atom, and a complexing agent without using a mechanical treating machine to obtain an electrolyte precursor,
    heating the electrolyte precursor to obtain a complex degradate,
    smoothing the complex degradate to obtain a smoothed complex degradate, and
    heating the smoothed complex degradate.

2.  The production method for a crystalline sulfide solid electrolyte according to claim 1, wherein the raw material inclusion further contains a halogen atom.

3.  The production method for a crystalline sulfide solid electrolyte according to claim 1 or 2, wherein the mixing comprises a first mixing using a first complexing agent and a second mixing using a second complexing agent that differs from the first complexing agent.

4.  The production method for a crystalline sulfide solid electrolyte according to claim 3, wherein the first complexing agent is a complexing agent capable of forming a complex that contains $Li_3PS_4$ and a halogen atom, and the second complexing agent is a complexing agent capable of forming a complex that contains $Li_3PS_4$.

5.  The production method for a crystalline sulfide solid electrolyte according to any one of claims 1 to 4, wherein the smoothing treatment is carried out using at least one apparatus selected from a grinding machine and stirring machine.

6.  The production method for a crystalline sulfide solid electrolyte according to any one of claims 1 to 5, wherein the smoothing treatment is carried out using a solvent.

7.  The production method for a crystalline sulfide solid electrolyte according to any one of claims 1 to 6, wherein the smoothing treatment is carried out using at least one apparatus selected from a ball mill, a bead mill, a cutter mill, a hammer mill, a pin mill, a tower mill, an attritor, an Aquamizer, a sand grinder, a Viscomill, a pearl mill, a co-ball mile, and a dynamic grinder.

8.  The production method for a crystalline sulfide solid electrolyte according to claim 6 or 7, wherein the solvent is at least one selected from a non-polar solvent and an aprotic polar solvent.

9.  The production method for a crystalline sulfide solid electrolyte according to any one of claims 1 to 8, wherein the ratio of the specific surface area (Sb) of the complex degradate before the smoothing treatment to the specific surface area (Sa) of the smoothed complex degradate (Sb/Sa) is 1.0 or more and 10.0 or less.

10. The production method for a crystalline sulfide solid electrolyte according to any one of claims 1 to 9, wherein the ratio of the average particle diameter ($D_{50}b$) of the complex degradate before the smoothing treatment to the average particle diameter ($D_{50}a$) of the smoothed complex degradate ($D_{50}b/D_{50}a$) is 1.0 or more and 100.0 or less.

11. The production method for a crystalline sulfide solid electrolyte according to any one of claims 1 to 10, wherein the crystalline sulfide solid electrolyte contains a thio-LISICON Region II-type crystal structure.

12. A method of producing a crystalline sulfide solid electrolyte comprising:

    mixing a raw material inclusion containing at least one selected from a lithium atom, a sulfur atom and a phosphorus atom, and a complexing agent without using a mechanical treating machine to obtain an electrolyte precursor,
    heating the electrolyte precursor to obtain a complex degradate,
    mechanically processing the complex degradate to obtain a modified complex degradate, and
    heating the modified complex degradate.

## Fig. 1

Raw Material Inclusion + Complexing Agent  →(Mixing)→  Electrolyte Precursor  →(Heating)→  Complex Degradate

→(Smoothing Treatment)→  Smoothed Complex Degradate  →(Heating)→  Crystalline Sulfide Solid Electrolyte

## Fig. 2

Fig. 3

Raw Material Inclusion     First Mixing     Second Mixing

\+                ➡       ➡     Electrolyte Precursor

Complexing Agent     First Complexing    Second Complexing
                     Agent              Agent

                                 Smoothing
    Heating                     Treatment
                   Complex        ➡     Smoothed Complex
      ➡       Degradate                 Degradate
                                Solvent

    Heating
      ➡       Crystalline Sulfide Solid Electrolyte

Fig. 4

Raw Material Inclusion    Mixing                 Heating

\+             ➡     Electrolyte     ➡     Complex
                          Precursor             Degradate

Complexing Agent

    Mechanical
    Treatment                    Heating
      ➡     Modified Complex     ➡     Crystalline Sulfide Solid Electrolyte
                Degradate

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013020894 A
- WO 2020105737 A1

- JP 2013016423 A

**Non-patent literature cited in the description**

- Chemical Handbook. Maruzen Corporation, 2004

- **KANNO et al.** *Journal of The Electrochemical Society,* 2001, vol. 148 (7), A742-746
- *Solid State Ionics,* 2006, vol. 177, 2721-2725